(19) Europäisches Patentamt
European Patent Office
Office européen des brevets

(11) **EP 4 011 950 A1**

(12) **EUROPEAN PATENT APPLICATION**
published in accordance with Art. 153(4) EPC

(43) Date of publication:
**15.06.2022 Bulletin 2022/24**

(21) Application number: **20851698.9**

(22) Date of filing: **04.08.2020**

(51) International Patent Classification (IPC):
$C08K\ 7/06$ (2006.01)   $C08L\ 67/00$ (2006.01)
$C08L\ 67/04$ (2006.01)   $C08J\ 5/04$ (2006.01)
$C08K\ 3/013$ (2018.01)

(52) Cooperative Patent Classification (CPC):
**C08J 5/04; C08K 3/013; C08K 7/06; C08L 67/00; C08L 67/04**

(86) International application number:
**PCT/JP2020/029756**

(87) International publication number:
**WO 2021/029268 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2019   JP 2019148162**
        **13.04.2020   JP 2020071639**

(71) Applicant: **SUMITOMO CHEMICAL COMPANY, LIMITED**
**Tokyo 103-6020 (JP)**

(72) Inventors:
• **TAMURA, Tasuku**
   **Tsukuba-shi, Ibaraki 300-3294 (JP)**
• **SUGIYAMA, Takayuki**
   **Tsukuba-shi, Ibaraki 300-3294 (JP)**

(74) Representative: **Vossius & Partner**
**Patentanwälte Rechtsanwälte mbB**
**Siebertstraße 3**
**81675 München (DE)**

(54) **LIQUID CRYSTAL POLYESTER RESIN PELLETS AND LIQUID CRYSTAL POLYESTER RESIN MOLDED ARTICLE**

(57)    Liquid crystal polyester resin pellets containing a liquid crystal polyester and pitch-based carbon fibers, in which a length-weighted average fiber length of the pitch-based carbon fibers is equal to or greater than 100 $\mu$m, and the liquid crystal polyester has an interfacial shear strength of equal to or greater than 30 MPa with a single fiber of pitch-based carbon fibers after a sizing agent is removed, which is measured by a single fiber pull-out method; and a liquid crystal polyester resin molded article containing a liquid crystal polyester and pitch-based carbon fibers, in which a length-weighted average fiber length of the pitch-based carbon fibers is equal to or greater than 100 $\mu$m, and the liquid crystal polyester has an interfacial shear strength of equal to or greater than 30 MPa with a single fiber of pitch-based carbon fibers after a sizing agent is removed, which is measured by a single fiber pull-out method.

EP 4 011 950 A1

**Description**

[Technical Field]

The present invention relates to liquid crystal polyester resin pellets and a liquid crystal polyester resin molded article.

Priority is claimed on Japanese Patent Application No. 2019-148162, filed August 9, 2019, and Japanese Patent Application No. 2020-071639, filed April 13, 2020, the contents of which are incorporated herein by reference.

[Background Art]

Liquid crystal polyester is known to have high fluidity, heat resistance, and dimensional accuracy. Liquid crystal polyester is rarely used alone, and is used as a liquid crystal polyester resin composition containing a filler in order to satisfy required characteristics (for example, flexural characteristics and impact resistance) in various applications. It is known that a molded article produced from such a liquid crystal polyester resin composition is lightweight and has high strength.

In recent years, in the field of transportation equipment including automobiles and aircraft, weight reduction of parts has been promoted for the purpose of improving fuel efficiency. In order to reduce the weight of the parts, the use of a resin material instead of the current metal material as a material of each part has been considered. For example, using a liquid crystal polyester resin composition as a molding material for frame members, suspension members, and the like for automobiles makes it possible to obtain lightweight automobiles compared to the current products.

However, a molded article obtained from the above-described liquid crystal polyester resin composition has a problem in that mechanical properties are lower than those of the molded article obtained from the metal material.

In the related art, in order to improve mechanical strength, heat resistance, particle resistance, and the like, a liquid crystal polyester resin composition containing a liquid crystal polyester and a fibrous filler, and a molded article obtained by using the same have been proposed (for example, see Patent Document 1).

[Citation List]

[Patent Document]

[Patent Document 1]
Japanese Unexamined Patent Application, First Publication No. 2012-193270

[Summary of Invention]

[Technical Problem]

There is a demand for further weight reduction in the formation of molded articles that account for a large proportion of the weight of vehicle bodies, such as frame members and suspension members for automobiles. However, as the weight of the molded article is further reduced, securing rigidity of the molded article becomes a problem.

With respect to this problem, the previous methods of simply mixing fibers as fillers into a liquid crystal polyester do not obtain the required flexural modulus of the molded article.

The present invention is made in consideration of these circumstances, and an object thereof is to provide liquid crystal polyester resin pellets with which a molded article having an excellent flexural modulus can be produced, and a liquid crystal polyester resin molded article.

[Solution to Problem]

The present invention has the following aspects.
[1] Liquid crystal polyester resin pellets, containing:

a liquid crystal polyester; and
pitch-based carbon fibers,
in which a length-weighted average fiber length of the pitch-based carbon fibers is equal to or greater than 100
$\mu$m, and

the liquid crystal polyester has an interfacial shear strength of equal to or greater than 30 MPa with a single fiber of pitch-based carbon fibers after a sizing agent is removed, which is measured by a single fiber pull-out method.

[2] The liquid crystal polyester resin pellets according to [1],
in which a content proportion of the pitch-based carbon fibers is equal to or greater than 10 parts by mass and smaller than 120 parts by mass with respect to 100 parts by mass of the liquid crystal polyester.
[3] The liquid crystal polyester resin pellets according to [1] or [2], in which the liquid crystal polyester includes a repeating unit having a 2,6-naphthylene group.
[4] The liquid crystal polyester resin pellets according to [3],
in which the liquid crystal polyester includes a repeating unit represented by Formula (1),

(1) -O-Ar$^1$-CO-

(in Formula (1), Ar$^1$ represents the 2,6-naphthylene group).
[5] The liquid crystal polyester resin pellets according to [4],

in which the liquid crystal polyester includes a repeating unit represented by Formula (1), (2), (3), or (4),
a content of the repeating unit represented by Formula (1) is equal to or greater than 20 mol% and equal to or smaller than 100 mol% with respect to a total amount of the repeating units represented by Formulae (1), (2), (3), and (4),
a content of the repeating unit represented by Formula (2) is equal to or greater than 0 mol% and equal to or smaller than 35 mol% with respect to the total amount of the repeating units represented by Formulae (1), (2), (3), and (4),
a content of the repeating unit represented by Formula (3) is equal to or greater than 0 mol% and equal to or smaller than 35 mol% with respect to the total amount of the repeating units represented by Formulae (1), (2), (3), and (4), and
a content of the repeating unit represented by Formula (4) is equal to or greater than 0 mol% and equal to or smaller than 35 mol% with respect to the total amount of the repeating units represented by Formulae (1), (2), (3), and (4),

(1) -O-Ar$^1$-CO-
(2) -CO-Ar$^2$-CO-
(3) -CO-Ar$^3$-CO-
(4) -O-Ar$^4$-O-

(in Formulae (1) to (4), Ar$^1$ and Ar$^2$ represent a 2,6-naphthylene group, Ar$^3$ represents a phenylene group or a biphenylene group, and Ar$^4$ represents a phenylene group, a naphthylene group, or a biphenylene group).

[6] The liquid crystal polyester resin pellets according to any one of [1] to [5],
in which a weight-average molecular weight of the liquid crystal polyester is equal to or greater than 150,000.
[7] A production method for the liquid crystal polyester resin pellets according to any one of [1] to [6], including:
a step of melt-kneading the liquid crystal polyester and the pitch-based carbon fibers.
[8] A liquid crystal polyester resin molded article, containing:

a liquid crystal polyester; and
pitch-based carbon fibers,
in which a length-weighted average fiber length of the pitch-based carbon fibers is equal to or greater than 100 μm, and
the liquid crystal polyester has an interfacial shear strength of equal to or greater than 30 MPa with a single fiber of pitch-based carbon fibers after a sizing agent is removed, which is measured by a single fiber pull-out method.

[Advantageous Effects of Invention]

According to the present invention, it is possible to provide liquid crystal polyester resin pellets with which a molded article having an excellent flexural modulus can be produced, and a liquid crystal polyester resin molded article.

[Description of Embodiments]

(Liquid Crystal Polyester Resin Pellets)

Liquid crystal polyester resin pellets of the present embodiment contain a liquid crystal polyester and pitch-based carbon fibers.

In the present specification, a composition containing a liquid crystal polyester and a fibrous filler is referred to as a "liquid crystal polyester resin composition". A molding material for producing a molded article, which is obtained by granulating the liquid crystal polyester resin composition, is referred to as "liquid crystal polyester resin pellets". A molded article obtained from the liquid crystal polyester resin composition is referred to as a "liquid crystal polyester resin molded article".

Examples of a shape of the liquid crystal polyester resin pellets include a cylindrical shape, a disk shape, an elliptical cylindrical shape, an elliptical disk shape, a go stone shape, a spherical shape, and an indefinite shape, but the shape of the liquid crystal polyester resin pellets is not limited thereto. From the viewpoint of productivity and handling during molding, a cylindrical shape is preferable.

In the liquid crystal polyester resin pellets of the present embodiment, a length-weighted average fiber length of the pitch-based carbon fibers is equal to or greater than 100 $\mu$m, and the liquid crystal polyester has an interfacial shear strength of equal to or greater than 30 MPa with a single fiber of pitch-based carbon fibers after a sizing agent is removed, which is measured by a single fiber pull-out method. According to the liquid crystal polyester resin pellets of the present embodiment, the flexural modulus of a molded article to be produced can be excellent.

The liquid crystal polyester resin pellets of the present embodiment are suitably used as a molding material for a molded article described later.

<Liquid Crystal Polyester>

The liquid crystal polyester resin pellets of the present embodiment contain a liquid crystal polyester.

It is preferable that the liquid crystal polyester used in the liquid crystal polyester resin pellets of the present embodiment exhibit liquid crystalline properties in a melted state and be melted at a temperature of equal to or lower than 450°C.

The liquid crystal polyester used in the present embodiment may be a liquid crystal polyester amide, a liquid crystal polyester ether, a liquid crystal polyester carbonate, or a liquid crystal polyester imide. The liquid crystal polyester used in the present embodiment is preferably a wholly aromatic liquid crystal polyester having only an aromatic compound as a raw material monomer.

In the liquid crystal polyester resin pellets of the present embodiment, the above-described liquid crystal polyester has an interfacial shear strength of equal to or greater than 30 MPa, preferably equal to or greater than 32 MPa and more preferably equal to or greater than 34 MPa, with a single fiber of pitch-based carbon fibers after a sizing agent is removed, which is measured by a single fiber pull-out method.

Since the liquid crystal polyester in the present embodiment has an interfacial shear strength of equal to or greater than 30 MPa with a single fiber of the pitch-based carbon fibers after a sizing agent is removed, which is measured by a single fiber pull-out method, in the liquid crystal polyester resin pellets of the present embodiment and a molded article formed by using the liquid crystal polyester resin pellets, adhesiveness between the liquid crystal polyester and the pitch-based carbon fibers is excellent. Therefore, the flexural modulus of the molded article is improved.

In addition, in a case where the interfacial shear strength is equal to or greater than the above-described preferred range, the adhesiveness between the liquid crystal polyester and the pitch-based carbon fibers is excellent, and the flexural modulus of the molded article is further improved.

In addition, the interfacial shear strength between the single fiber of the pitch-based carbon fibers and the liquid crystal polyester after the sizing agent is removed is usually equal to or smaller than 50 MPa.

For example, the interfacial shear strength between the single fiber of the pitch-based carbon fibers and the liquid crystal polyester after the sizing agent is removed is preferably equal to or greater than 30 MPa and equal to or smaller than 50 MPa, more preferably equal to or greater than 32 MPa and equal to or smaller than 50 MPa, even more preferably equal to or greater than 34 MPa and equal to or smaller than 50 MPa, and particularly preferably equal to or greater than 34 MPa and equal to or smaller than 40 MPa.

Here, the pitch-based carbon fibers used for measuring the interfacial shear strength may be the same as or different from the pitch-based carbon fibers in the liquid crystal polyester resin pellets of the present embodiment. In a case of a single fiber of pitch-based carbon fibers after the sizing agent is removed, as a characteristic of the liquid crystal polyester, it is possible to evaluate and measure substantially the same interfacial shear strength. However, in Examples of the present specification, pitch-based carbon fibers (DIALEAD (registered trademark) K13916, tensile strength: 3000 MPa, tensile elastic modulus: 760 GPa, density: 2.2 g/cm$^3$) manufactured by Mitsubishi Chemical Co.,

Ltd. are washed with an acetone solution for 24 hours to remove the sizing agent on the surface, and a single fiber of the pitch-based carbon fibers is used for measuring the interfacial shear strength.

Typical examples of the liquid crystal polyester used in the present embodiment include a material obtained by polymerization (polycondensation) of aromatic hydroxycarboxylic acid, aromatic dicarboxylic acid, and at least one compound selected from the group consisting of aromatic diol, aromatic hydroxylamine, and aromatic diamine, a material obtained by polymerization of plural kinds of aromatic hydroxycarboxylic acid, a material obtained by polymerization of aromatic dicarboxylic acid and at least one compound selected from the group consisting of aromatic diol, aromatic hydroxyamine, and aromatic diamine, and a material obtained by polymerization of polyester such as polyethylene terephthalate and aromatic hydroxycarboxylic acid. Here, as the aromatic hydroxycarboxylic acid, the aromatic dicarboxylic acid, the aromatic diol, the aromatic hydroxyamine, and the aromatic diamine, a polymerizable derivative thereof may be each independently used in place of a part or all thereof.

Examples of a polymerizable derivative of a compound having a carboxyl group, such as the aromatic hydroxycarboxylic acid and the aromatic dicarboxylic acid, include a compound (ester) obtained by converting the carboxyl group into an alkoxycarbonyl group or an aryloxycarbonyl group, a compound (acid halide) obtained by converting the carboxyl group into a haloformyl group, and a compound (acid anhydride) obtained by converting the carboxyl group into an acyloxycarbonyl group. Examples of a polymerizable derivative of a compound having a hydroxyl group, such as the aromatic hydroxycarboxylic acid, the aromatic diol, and the aromatic hydroxyamine, include a compound (acylated product) obtained by acylating the hydroxyl group and converting it into an acyloxyl group. Examples of a polymerizable derivative of a compound having an amino group, such as the aromatic hydroxyamine and the aromatic diamine, include a compound (acylated product) obtained by acylating the amino group and converting it into an acylamino group.

Among these, from the viewpoint of improving the adhesiveness with the pitch-based carbon fibers, the liquid crystal polyester used in the present embodiment preferably includes a repeating unit including a 2,6-naphthylene group.

In a case where the liquid crystal polyester used in the present embodiment includes a repeating unit including a 2,6-naphthylene group, a content of the repeating unit having a 2,6-naphthylene group is preferably equal to or greater than 10 mol%, more preferably equal to or greater than 15 mol%, and even more preferably equal to or greater than 20 mol% with respect to a total amount of all repeating units of the liquid crystal polyester.

In addition, the content of the repeating unit having a 2,6-naphthylene group is preferably equal to or smaller than 90 mol%, more preferably equal to or smaller than 80 mol%, and even more preferably equal to or smaller than 75 mol% with respect to the total amount of all repeating units of the liquid crystal polyester.

For example, the content of the repeating unit including a 2,6-naphthylene group is preferably equal to or greater than 10 mol% and equal to or smaller than 90 mol%, more preferably equal to or greater than 15 mol% and equal to or smaller than 80 mol%, and even more preferably equal to or greater than 20 mol% and equal to or smaller than 75 mol% with respect to the total amount of all repeating units of the liquid crystal polyester.

In addition, the liquid crystal polyester used in the present embodiment more preferably includes a repeating unit (hereinafter, may be referred to as a "repeating unit (1)") represented by Formula (1).

In addition, it is preferable that the liquid crystal polyester used in the present embodiment include a repeating unit (hereinafter, may be referred to as a "repeating unit (1)") represented by Formula (1), a repeating unit (hereinafter, may be referred to as a "repeating unit (2)") represented by Formula (2), a repeating unit (hereinafter, may be referred to as a "repeating unit (3)") represented by Formula (3), or a repeating unit (hereinafter, may be referred to as a "repeating unit (4)") represented by Formula (4), in which a content of the repeating unit (1) is equal to or greater than 20 mol% and equal to or smaller than 100 mol% with respect to a total amount of the repeating units (1), (2), (3), and (4), a content of the repeating unit (2) is equal to or greater than 0 mol% and equal to or smaller than 35 mol% with respect to the total amount of the repeating units (1), (2), (3), and (4), a content of the repeating unit (3) is equal to or greater than 0 mol% and equal to or smaller than 35 mol% with respect to the total amount of the repeating units (1), (2), (3), and (4), and a content of the repeating unit (4) is equal to or greater than 0 mol% and equal to or smaller than 35 mol% with respect to the total amount of the repeating units (1), (2), (3), and (4).

(1) -O-Ar$^1$-CO-
(2) -CO-Ar$^2$-CO-
(3) -CO-Ar$^3$-CO-
(4) -O-Ar$^4$-O-

(In Formulae (1) to (4), Ar$^1$ and Ar$^2$ represent a 2,6-naphthylene group, Ar$^3$ represents a phenylene group or a biphenylene group, and Ar$^4$ represents a phenylene group, a naphthylene group, or a biphenylene group.)

The repeating unit (1) is a repeating unit derived from a predetermined aromatic hydroxycarboxylic acid.

In the repeating unit (1), Ar$^1$ is a 2,6-naphthylene group. That is, the repeating unit (1) is a repeating unit derived from 6-hydroxy-2-naphthoic acid.

In the present specification, "derived" means that, in order to polymerize the raw material monomer, the chemical structure of a functional group which contributes to polymerization changes, and no other structural change occurs.

The repeating unit (2) and the repeating unit (3) are repeating units derived from a predetermined aromatic dicarboxylic acid.

In the repeating unit (2), $Ar^2$ is a 2,6-naphthylene group. That is, the repeating unit (2) is a repeating unit derived from 2,6-naphthalenedicarboxylic acid.

In a case where $Ar^3$ is a phenylene group, the repeating unit (3) is a repeating unit derived from phthalic acid.

In a case where $Ar^3$ is a biphenylene group, the repeating unit (3) is a repeating unit derived from dicarboxybiphenyl.

Among these, the repeating unit (3) is preferably a repeating unit in which $Ar^3$ is a 1,4-phenylene group (repeating unit derived from terephthalic acid) or a repeating unit in which $Ar^3$ is a 4,4'-biphenylene group (repeating unit derived from 4,4'-biphenyldicarboxylic acid).

The repeating unit (4) is a repeating unit derived from a predetermined aromatic diol.

In a case where $Ar^4$ is a phenylene group, the repeating unit (4) is a repeating unit derived from hydroquinone, catechol, or resorcinol.

In a case where $Ar^4$ is a naphthylene group, the repeating unit (4) is a repeating unit derived from dihydroxynaphthalene.

In a case where $Ar^4$ is a biphenylylene group, the repeating unit (4) is a repeating unit derived from dihydroxybiphenyl.

Among these, the repeating unit (4) is preferably a repeating unit in which $Ar^4$ is p-phenylene group (repeating unit derived from hydroquinone), a repeating unit in which $Ar^4$ is a 2,6-naphthylene group (repeating unit derived from 2,6-dihydroxynaphthalene), or a repeating unit in which $Ar^4$ is a 4,4'-biphenylylene group (repeating unit derived from 4,4'-dihydroxybiphenyl).

The content of the repeating unit (1) is preferably equal to or greater than 20 mol%, more preferably equal to or greater than 30 mol%, even more preferably equal to or greater than 40 mol%, and particularly preferably equal to or greater than 50 mol% with respect to a total amount of all repeating units (value obtained by adding up a substance amount equivalent (mol) of each repeating unit, which is obtained by dividing the mass of each repeating unit constituting the liquid crystal polyester by the formula weight of each repeating unit).

In addition, the content of the repeating unit (1) is preferably equal to or smaller than 100 mol%, more preferably equal to or smaller than 90 mol%, even more preferably equal to or smaller than 80 mol%, and particularly preferably equal to or smaller than 70 mol% with respect to the total amount of all repeating units.

For example, the content of the repeating unit (1) is preferably equal to or greater than 20 mol% and equal to or smaller than 100 mol%, more preferably equal to or greater than 30 mol% and equal to or smaller than 90 mol%, even more preferably equal to or greater than 40 mol% and equal to or smaller than 80 mol%, and particularly preferably equal to or greater than 50 mol% and equal to or smaller than 70 mol% with respect to the total amount of all repeating units.

The content of the repeating unit (2) is preferably equal to or greater than 0 mol% and equal to or smaller than 35 mol%, more preferably equal to or greater than 6 mol% and equal to or smaller than 30 mol%, even more preferably equal to or greater than 7 mol% and equal to or smaller than 20 mol%, and particularly preferably equal to or greater than 8 mol% and equal to or smaller than 17.5 mol% with respect to the total amount of all repeating units.

The content of the repeating unit (3) is preferably equal to or greater than 0 mol% and equal to or smaller than 35 mol%, more preferably equal to or greater than 3 mol% and equal to or smaller than 30 mol%, even more preferably equal to or greater than 4 mol% and equal to or smaller than 20 mol%, and particularly preferably equal to or greater than 5 mol% and equal to or smaller than 12 mol% with respect to the total amount of all repeating units.

The content of the repeating unit (4) is preferably equal to or greater than 0 mol% and equal to or smaller than 35 mol%, more preferably equal to or greater than 10 mol% and equal to or smaller than 35 mol%, even more preferably equal to or greater than 15 mol% and equal to or smaller than 30 mol%, and particularly preferably equal to or greater than 17.5 mol% and equal to or smaller than 27.5 mol% with respect to the total amount of all repeating units.

In the liquid crystal polyester in the present embodiment, the sum of the content of the repeating unit (1), the content of the repeating unit (2), the content of the repeating unit (3), and the content of the repeating unit (4) in the liquid crystal polyester does not exceed 100 mol%.

As the content of the repeating unit (1) becomes higher, it becomes easier to improve melt fluidity, heat resistance, or strength and rigidity. However, in a case where the content is too high, the melting temperature or melting viscosity tends to increase, and a temperature required for molding tends to be high.

A proportion of a total content of the repeating unit (2) and repeating unit (3) to the content of the repeating unit (4) is shown as [total content of repeating unit (2) and repeating unit (3)]/[content of repeating unit (4)] (mol/mol), and is preferably 0.9/1 to 1/0.9, more preferably 0.95/1 to 1/0.95, and even more preferably 0.98/1 to 1/0.98.

The liquid crystal polyester used in the present embodiment may have two or more repeating units (1) to (4) each independently. In addition, the liquid crystal polyester may have a repeating unit other than the repeating units (1) to (4), and the content thereof may be equal to or smaller than 10 mol% or may be equal to or smaller than 5 mol% with respect to the total amount of all repeating units.

The liquid crystal polyester used in the present embodiment is preferably produced by causing melt polymerization of a raw material monomer corresponding to the repeating unit constituting the liquid crystal polyester, and causing solid phase polymerization of the obtained polymer (hereinafter, may be referred to as a "prepolymer"). As a result, it is possible to produce high-molecular-weight liquid crystal polyester having high heat resistance, strength, and rigidity with excellent operability. The melt polymerization may be performed in the presence of a catalyst, and examples of the catalyst include metal compounds such as magnesium acetate, stannous acetate, tetrabutyl titanate, lead acetate, sodium acetate, potassium acetate, and antimony trioxide, and nitrogen-containing heterocyclic compounds such as 4-(dimethylamino) pyridine and 1-methylimidazole. Among these, a nitrogen-containing heterocyclic compound is preferably used.

A flow starting temperature of the liquid crystal polyester used in the present embodiment is preferably equal to or higher than 280°C, more preferably equal to or higher than 280°C and equal to or lower than 400°C, and even more preferably equal to or higher than 280°C and equal to or lower than 380°C.

As the flow starting temperature of the liquid crystal polyester used in the present embodiment becomes higher, the heat resistance, strength, and rigidity of the liquid crystal polyester tend to be improved. On the other hand, in a case where the flow starting temperature of the liquid crystal polyester is higher than 400°C, the melting temperature and melting viscosity of the liquid crystal polyester tend to be high. Therefore, the temperature required for molding the liquid crystal polyester tends to be high.

In the present specification, the flow starting temperature of the liquid crystal polyester is also referred to as a flow temperature, and is a temperature which is a measure of a molecular weight of the liquid crystal polyester (see "Liquid Crystal Polymer, -Synthesis-Molding-Application-", edited by Naoyuki Koide, CMC Co., Ltd., June 5, 1987, p.95). The flow starting temperature is a temperature at which a viscosity of 4800 Pa·s (48000 poise) is exhibited in a case where the liquid crystal polyester is melted and extruded from a nozzle having an inner diameter of 1 mm and a length of 10 mm by using a capillary rheometer while raising the temperature at a rate of 4°C/min under a load of 9.8 MPa (100 kg/cm$^2$).

A weight-average molecular weight of the above-described liquid crystal polyester is preferably equal to or greater than 150,000, more preferably equal to or greater than 160,000, and particularly preferably equal to or greater than 170,000.

In a case where the weight-average molecular weight of the liquid crystal polyester is equal to or greater than the above-described lower limit value, the above-described interfacial shear strength tends to increase.

In addition, the weight-average molecular weight of the liquid crystal polyester is usually equal to or smaller than 250,000.

For example, the weight-average molecular weight of the liquid crystal polyester is preferably equal to or greater than 150,000 and equal to or smaller than 250,000, more preferably equal to or greater than 160,000 and equal to or smaller than 250,000, and even more preferably equal to or greater than 170,000 and equal to or smaller than 250,000.

The weight-average molecular weight of the liquid crystal polyester is a value measured by a polystyrene conversion value by GPC measurement.

A content of the liquid crystal polyester in the present embodiment is preferably equal to or greater than 40 parts by mass, more preferably equal to or greater than 45 parts by mass, and even more preferably equal to or greater than 50 parts by mass with respect to a total amount (100 parts by mass) of the liquid crystal polyester resin pellets.

In addition, the content of the liquid crystal polyester in the present embodiment is preferably equal to or smaller than 95 parts by mass and more preferably equal to or smaller than 90 parts by mass with respect to the total amount (100 parts by mass) of the liquid crystal polyester resin pellets.

For example, the content of the liquid crystal polyester in the present embodiment is preferably equal to or greater than 40 parts by mass and equal to or smaller than 95 parts by mass, more preferably equal to or greater than 45 parts by mass and equal to or smaller than 90 parts by mass, and even more preferably equal to or greater than 50 parts by mass and equal to or smaller than 90 parts by mass with respect to the total amount (100 parts by mass) of the liquid crystal polyester resin pellets.

<Pitch-based Carbon Fibers>

The liquid crystal polyester resin pellets of the present embodiment contain pitch-based carbon fibers.

A density of the pitch-based carbon fibers in the liquid crystal polyester resin pellets of the present embodiment is preferably equal to or greater than 2.10 g/cm$^3$. The density of the pitch-based carbon fibers is preferably equal to or greater than 2.11 g/cm$^3$, more preferably equal to or greater than 2.12 g/cm$^3$, and particularly preferably equal to or greater than 2.13 g/cm$^3$.

In addition, the density of the pitch-based carbon fibers in the liquid crystal polyester resin pellets of the present embodiment is preferably equal to or smaller than 2.25 g/cm$^3$, more preferably equal to or smaller than 2.22 g/cm$^3$, and particularly preferably equal to or smaller than 2.20 g/cm$^3$.

For example, the density of the pitch-based carbon fibers in the liquid crystal polyester resin pellets is preferably equal to or greater than 2.10 g/cm$^3$ and equal to or smaller than 2.25 g/cm$^3$, more preferably equal to or greater than 2.11 g/cm$^3$ and equal to or smaller than 2.22 g/cm$^3$, even more preferably equal to or greater than 2.12 g/cm$^3$ and equal to or smaller than 2.20 g/cm$^3$, and particularly preferably equal to or greater than 2.13 g/cm$^3$ and equal to or smaller than 2.20 g/cm$^3$.

A length-weighted average fiber length of the pitch-based carbon fibers in the liquid crystal polyester resin pellets of the present embodiment is equal to or greater than 100 $\mu$m.

The length-weighted average fiber length of the pitch-based carbon fibers in the liquid crystal polyester resin pellets is preferably equal to or greater than 120 $\mu$m, more preferably equal to or greater than 150 $\mu$m, even more preferably equal to or greater than 170 $\mu$m, and particularly preferably equal to or greater than 180 $\mu$m.

In addition, by setting the fiber length of the pitch-based carbon fibers in the liquid crystal polyester resin pellets of the present embodiment equal to or greater than the above-described lower limit value, in a case where the liquid crystal polyester resin pellets are injection-molded, the length-weighted average fiber length of the pitch-based carbon fibers in the liquid crystal polyester resin molded article can be easily adjusted to equal to or greater than 100 $\mu$m, and it is easy to mold a molded article having an excellent flexural modulus.

In addition, the length-weighted average fiber length of the pitch-based carbon fibers in the liquid crystal polyester resin pellets is preferably smaller than 5 mm, more preferably equal to or smaller than 4 mm, even more preferably equal to or smaller than 2 mm, still more preferably equal to or smaller than 1 mm, particularly preferably equal to or smaller than 500 $\mu$m, and most preferably equal to or smaller than 300 $\mu$m.

For example, the length-weighted average fiber length of the pitch-based carbon fibers in the liquid crystal polyester resin pellets is preferably equal to or greater than 100 $\mu$m and smaller than 5 mm, more preferably equal to or greater than 120 $\mu$m and equal to or smaller than 4 mm, even more preferably equal to or greater than 150 $\mu$m and equal to or smaller than 2 mm, still more preferably equal to or greater than 170 $\mu$m and equal to or smaller than 1 mm, particularly preferably equal to or greater than 180 $\mu$m and equal to or smaller than 500 $\mu$m, and most preferably equal to or greater than 180 $\mu$m and equal to or smaller than 300 $\mu$m.

<Method for Measuring Length-weighted Average Fiber Length>

The length-weighted average fiber length of the pitch-based carbon fibers in the liquid crystal polyester resin pellets can be measured by the following measuring method.

(1) First, as a test sample, from a central portion of a multipurpose test piece (type A1) conforming to JIS K7139, a width of 10 mm × a length of 20 mm × a thickness of 4 mm is cut out. In addition, approximately 5 g of resin pellets are selected. These test samples are sintered in a muffle furnace to remove a resin component. Here, firing conditions are 500°C and 3 hours.

(2) A carbon fiber dispersion liquid is produced by dispersing only the pitch-based carbon fibers in 500 mL of an aqueous solution containing 0.05 volume% of a surfactant (Micro90 manufactured by INTERNATIONAL PRODUCTS CORPORATION).

(3) 50 mL is extracted from the 500 mL dispersion liquid and filtered under reduced pressure using a filter paper for Kiriyama ROHTO (No. 5C) having a diameter of 90 mm, the carbon fibers dispersed on the filter paper are observed with a microscope (VH-ZST manufactured by KEYENCE CORPORATION), and 5 images at a magnification of 100 times (in a case of a resin pellet sample and a molded article sample) are captured for each sample.

(4) All of the 5 captured images are binarized with image-processing software (WinROOF2018 manufactured by MITANI CORPORATION), and the fiber length of the carbon fibers is measured.

(Method for Measuring Fiber Length)

(a) A monochrome pixel conversion processing is performed on the captured images.

(b) A binarization processing is performed so that the captured carbon fibers are colored.

(c) A measurement of the fiber length of the carbon fibers is performed using a needle-shaped separation function of the image-processing software.

(d) The fiber lengths of the carbon fibers and curved carbon fibers which cannot be binarized in (c) are measured by multi-point measurement.

However, in (c) and (d), carbon fibers of 10 $\mu$m or less are judged to be noise and are not included in the measured number of carbon fibers n. In a case where n > 500, that is, the number n of carbon fibers to be measured does not exceed 500, the process returns to (3), additional images are captured, and the measurement is performed until n exceeds 500.

(5) From the fiber length of the fibrous filler (carbon fibers) in the 5 images, the length-weighted average fiber length 1m = ($\Sigma$li$^2$ $\times$ ni) / ($\Sigma$li $\times$ ni) is determined ($\Sigma$ni > 500).

> li: fiber length of carbon fibers
> ni: number of carbon fibers having fiber length li

A tensile strength of the pitch-based carbon fibers is preferably equal to or greater than 2000 MPa, more preferably equal to or greater than 2500 MPa, and even more preferably equal to or greater than 3000 MPa.

By using pitch-based carbon fibers having a tensile strength equal to or greater than the above-described preferred value, fiber breakage during processing up to production of the molded article is suppressed, and the fiber can be left for a long time, so that the effect of the invention can be easily obtained.

The tensile strength of the pitch-based carbon fibers means a value measured in accordance with JIS R 7606:2000.

The pitch-based carbon fibers can be mainly classified into mesophase pitch-based carbon fibers using mesophase pitch as a starting raw material and isotropic pitch-based carbon fibers using isotropic pitch as a starting raw material. Among these, from the viewpoint of obtaining high mechanical properties, mesophase pitch-based carbon fibers are preferably used.

An elastic modulus of the pitch-based carbon fibers is preferably equal to or greater than 200 GPa, more preferably equal to or greater than 250 GPa, even more preferably equal to or greater than 500 GPa, and particularly preferably equal to or greater than 650 GPa. By using highly elastic pitch-based carbon fibers, elastic modulus of a molded article can be improved, and the effect of the invention can be easily obtained.

The elastic modulus of the pitch-based carbon fibers means a value measured in accordance with JIS R 7606:2000.

Examples of the pitch-based carbon fibers include "DIALEAD (registered trademark)" manufactured by Mitsubishi Chemical Co., Ltd., "GRANOC (registered trademark)" manufactured by Nippon Graphite Fiber Co., Ltd., "DONACARBO (registered trademark)" manufactured by Osaka Gas Chemical Co., Ltd., and "KRECA (registered trademark)" manufactured by Kureha Corporation. Examples of the mesophase pitch-based carbon fibers include "DIALEAD (registered trademark)" manufactured by Mitsubishi Chemical Co., Ltd. and "GRANOC (registered trademark)" manufactured by Nippon Graphite Fiber Co., Ltd. It is preferable to use the mesophase pitch-based carbon fibers because mechanical properties of the molded article can be improved.

Examples of a form of the pitch-based carbon fibers include roving, chopped fiber, and milled fiber. Pitch-based carbon fibers having these forms may be used alone or in combination of two or more. Chopped fibers are preferable because they are easy to handle and the length-weighted average fiber length can be easily controlled.

A number-average fiber diameter of the pitch-based carbon fibers in the liquid crystal polyester resin pellets of the present embodiment is preferably equal to or greater than 1 $\mu$m, more preferably equal to or greater than 3 $\mu$m, and even more preferably equal to or greater than 5 $\mu$m.

In addition, the number-average fiber diameter of the pitch-based carbon fibers in the liquid crystal polyester resin pellets of the present embodiment is preferably equal to or smaller than 40 $\mu$m, more preferably equal to or smaller than 35 $\mu$m, even more preferably equal to or smaller than 25 $\mu$m, particularly preferably equal to or smaller than 20 $\mu$m, and most preferably equal to or smaller than 15 $\mu$m.

For example, the number-average fiber diameter of the pitch-based carbon fibers in the liquid crystal polyester resin pellets of the present embodiment is preferably 1 to 40 $\mu$m, more preferably 3 to 35 $\mu$m, even more preferably 3 to 25 $\mu$m, particularly preferably 3 to 20 $\mu$m, and most preferably 5 to 15 $\mu$m.

In the present specification, as the number-average fiber diameter of the pitch-based carbon fibers, the pitch-based carbon fibers are observed with a microscope (500 times), and the number-average value of measured fiber diameters of 500 pitch-based carbon fibers is adopted.

In a case where the number-average fiber diameter of the pitch-based carbon fibers is equal to or greater than the lower limit value of the above-described preferred range, the pitch-based carbon fibers are likely to be dispersed in the liquid crystal polyester resin pellets. In addition, it is easy to handle the pitch-based carbon fibers in a case of producing the liquid crystal polyester resin pellets.

On the other hand, in a case of being equal to or smaller than the upper limit value of the above-described preferred range, the liquid crystal polyester is efficiently strengthened by the pitch-based carbon fibers. Therefore, it is possible to impart excellent flexural modulus to a molded article obtained by molding the liquid crystal polyester resin pellets of the present embodiment.

Pitch-based carbon fibers which have been treated with a sizing agent may be used, but since pitch-based carbon fibers which have not been treated with a sizing agent are less likely to generate voids in the molded article to be produced, it is preferable to use pitch-based carbon fibers which have not been treated with a sizing agent.

The sizing agent in the present invention is not particularly limited, and examples thereof include nylon-based polymers, polyether-based polymers, epoxy-based polymers, ester-based polymers, urethane-based polymers, and mixed polymers thereof or modified polymers of each of the above. In addition, it is also possible to use known coupling agents such as so-called silane coupling agents such as aminosilane and epoxysilane, and titanium coupling agents.

In a case where the pitch-based carbon fibers are chopped fibers, from the viewpoint of economy and handleability at the time of production, the number of single threads in the pitch-based carbon fibers is preferably equal to or greater than 10,000 and equal to or smaller than 100,000, more preferably equal to or greater than 10,000 and equal to or smaller than 50,000, and even more preferably equal to or greater than 10,000 and equal to or smaller than 30,000.

A content of the pitch-based carbon fibers in the liquid crystal polyester resin pellets of the present embodiment is preferably equal to or greater than 10 parts by mass, more preferably equal to or greater than 15 parts by mass, even more preferably equal to or greater than 18 parts by mass, still more preferably equal to or greater than 25 parts by mass, particularly preferably equal to or greater than 40 parts by mass, and most preferably equal to or greater than 60 parts by mass with respect to 100 parts by mass of the above-described liquid crystal polyester.

In addition, the content of the pitch-based carbon fibers in the liquid crystal polyester resin pellets of the present embodiment is preferably smaller than 120 parts by mass and more preferably equal to or smaller than 100 parts by mass with respect to 100 parts by mass of the above-described liquid crystal polyester.

For example, the content of the pitch-based carbon fibers in the liquid crystal polyester resin pellets of the present embodiment is preferably equal to or greater than 10 parts by mass and smaller than 120 parts by mass, more preferably equal to or greater than 15 parts by mass and equal to or smaller than 100 parts by mass, even more preferably equal to or greater than 18 parts by mass and equal to or smaller than 100 parts by mass, still more preferably equal to or greater than 25 parts by mass and equal to or smaller than 100 parts by mass, particularly preferably equal to or greater than 40 parts by mass and equal to or smaller than 100 parts by mass, and most preferably equal to or greater than 60 parts by mass and equal to or smaller than 100 parts by mass with respect to 100 parts by mass of the above-described liquid crystal polyester.

In a case where the content of the pitch-based carbon fibers is equal to or greater than the lower limit value of the above-described preferred range, the effect of improving the flexural modulus by the pitch-based carbon fibers is likely to be enhanced.

On the other hand, in a case of being equal to or smaller than the upper limit value of the above-described preferred range, the pitch-based carbon fibers can be quantitatively supplied, which is suitable for the production of resin pellets.

The content of the pitch-based carbon fibers in the present embodiment is preferably equal to or greater than 5 parts by mass and more preferably equal to or greater than 10 parts by mass with respect to the total amount (100 parts by mass) of the liquid crystal polyester resin pellets.

In addition, the content of the pitch-based carbon fibers in the present embodiment is preferably equal to or smaller than 60 parts by mass, more preferably equal to or smaller than 55 parts by mass, and even more preferably equal to or smaller than 50 parts by mass with respect to the total amount (100 parts by mass) of the liquid crystal polyester resin pellets.

For example, the content of the pitch-based carbon fibers in the present embodiment is preferably equal to or greater than 5 parts by mass and equal to or smaller than 60 parts by mass, more preferably equal to or greater than 10 parts by mass and equal to or smaller than 55 parts by mass, and even more preferably equal to or greater than 10 parts by mass and equal to or smaller than 50 parts by mass with respect to the total amount (100 parts by mass) of the liquid crystal polyester resin pellets.

<Other components>

The liquid crystal polyester resin pellets of the present embodiment may include one or more other components such as a thermoplastic resin other than the liquid crystal polyester, a filler, and an additive as a raw material, as necessary, in addition to the above-described liquid crystal polyester and the above-described pitch-based carbon fibers.

Examples of a thermoplastic resin other than the liquid crystal polyester included in the liquid crystal polyester resin pellets include polyolefin resins such as polypropylene, polybutadiene, and polymethylpentene; vinyl-based resins such as vinyl chloride, vinylidene chloride vinyl acetate, and polyvinyl alcohol; polystyrene-based resins such as polystyrene, acrylonitrile-styrene resin (AS resin), and acrylonitrile-butadiene-styrene resin (ABS resin); polyamide-based resins such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymethaxylylene adipamide (nylon MXD6), polynonamethylene terephthalamide (nylon 9T), and polydecamethylene terephthalamide (nylon 10T); polyester-based resins other than the liquid crystal polyester, such as polyethylene terephthalate, polyethylene naphthalate, polybutylene terephthalate, and polytrimethylene terephthalate; polysulfone-based resins such as modified polysulfone, polyethersulfone, polysulfone, and polyphenylsulfone; polyphenylene sulfide-based resins such as linear polyphenylene sulfide, crosslinked polyphenylene sulfide, and semi-crosslinked polyphenylene sulfide; polyetherketone-based resins such as polyetherketone, polyetheretherketone, and polyetherketoneketone; polyimide-based resins such as thermoplastic polyimide, polyamidoimide, and polyetherimide; and thermoplastic resins such as polycarbonate and polyphenylene ether.

The filler may be a plate-shaped filler, spherical filler, or other granular fillers. In addition, the filler may be inorganic fillers or organic fillers.

Examples of the plate-shaped inorganic filler include talc, mica, graphite, wollastonite, glass flakes, barium sulfate, and calcium carbonate. Mica may be muscovite, phlogopite, fluorophlogopite, or tetrasilicic mica.

Examples of the granular inorganic filler include silica, alumina, titanium oxide, glass beads, glass balloons, boron nitride, silicon carbide, and calcium carbonate.

Examples of the additive include flame retardants, conductivity imparting agents, crystal nucleating agents, UV absorbers, antioxidants, anti-vibration agents, antibacterial agents, insect repellents, deodorants, coloring inhibitors, thermal stabilizers, mold release agents, antistatic agents, plasticizers, lubricants, colorants, pigments, dyes, foaming agents, antifoaming agents, viscosity modifiers, and surfactants.

The liquid crystal polyester resin pellets of the present embodiment contain the liquid crystal polyester and the pitch-based carbon fibers, and in the liquid crystal polyester resin pellets, the length-weighted average fiber length of the pitch-based carbon fibers is equal to or greater than 100 $\mu$m, and the liquid crystal polyester has an interfacial shear strength of equal to or greater than 30 MPa with a single fiber of pitch-based carbon fibers after a sizing agent is removed, which is measured by a single fiber pull-out method.

In addition, as the liquid crystal polyester resin pellets of the present embodiment, it is preferable that, in the liquid crystal polyester resin pellets, the length-weighted average fiber length of the pitch-based carbon fibers be equal to or greater than 100 $\mu$m and smaller than 5 mm, and the liquid crystal polyester have an interfacial shear strength of equal to or greater than 30 MPa and equal to or smaller than 50 MPa with a single fiber of pitch-based carbon fibers after a sizing agent is removed, which is measured by a single fiber pull-out method.

In addition, as the liquid crystal polyester resin pellets of the present embodiment, it is more preferable that, in the liquid crystal polyester resin pellets of the present embodiment, the length-weighted average fiber length of the pitch-based carbon fibers be equal to or greater than 120 $\mu$m and equal to or smaller than 4 mm, and the liquid crystal polyester have an interfacial shear strength of equal to or greater than 32 MPa and equal to or smaller than 50 MPa with a single fiber of pitch-based carbon fibers after a sizing agent is removed, which is measured by a single fiber pull-out method.

In addition, as the liquid crystal polyester resin pellets of the present embodiment, it is even more preferable that, in the liquid crystal polyester resin pellets, the length-weighted average fiber length of the pitch-based carbon fibers be equal to or greater than 150 $\mu$m and equal to or smaller than 2 mm, and the liquid crystal polyester have an interfacial shear strength of equal to or greater than 34 MPa and equal to or smaller than 50 MPa with a single fiber of pitch-based carbon fibers after a sizing agent is removed, which is measured by a single fiber pull-out method.

In addition, as the liquid crystal polyester resin pellets of the present embodiment, it is particularly preferable that, in the liquid crystal polyester resin pellets, the length-weighted average fiber length of the pitch-based carbon fibers be equal to or greater than 170 $\mu$m and equal to or smaller than 1 mm, and the liquid crystal polyester have an interfacial shear strength of equal to or greater than 34 MPa and equal to or smaller than 50 MPa with a single fiber of pitch-based carbon fibers after a sizing agent is removed, which is measured by a single fiber pull-out method.

In addition, as the liquid crystal polyester resin pellets of the present embodiment, it is most preferable that, in the liquid crystal polyester resin pellets, the length-weighted average fiber length of the pitch-based carbon fibers be equal to or greater than 192 $\mu$m and equal to or smaller than 280 $\mu$m, and the liquid crystal polyester have an interfacial shear strength of equal to or greater than 38 MPa and equal to or smaller than 50 MPa with a single fiber of pitch-based carbon fibers after a sizing agent is removed, which is measured by a single fiber pull-out method.

As described above, the liquid crystal polyester resin pellets of the present embodiment contain the liquid crystal polyester and the pitch-based carbon fibers having a length-weighted average fiber length of equal to or greater than 100 $\mu$m.

In general, in resin pellets containing a thermoplastic resin and pitch-based carbon fibers, due to shear force in a case of molding the resin pellets, the pitch-based carbon fibers contained therein are broken and shortened, so that mechanical strength is relatively low and it is difficult to improve the flexural modulus.

On the other hand, since the liquid crystal polyester can be molded with a very low shear force, it is possible to suppress breakage of the pitch-based carbon fibers and increase the fiber-reinforcing effect, so that the mechanical strength is high and the flexural modulus is improved. In a case where the length-weighted average fiber length of the pitch-based carbon fibers used together is equal to or greater than 100 $\mu$m, the pitch-based carbon fibers can also maintain a certain length and it is possible to maintain a certain length. Therefore, it is presumed that the molded article produced by using the liquid crystal polyester resin pellets containing the liquid crystal polyester and the pitch-based carbon fibers has an improved flexural modulus.

Furthermore, as the liquid crystal polyester, by selecting a liquid crystal polyester having an interfacial shear strength of equal to or greater than 30 MPa with a single fiber of the pitch-based carbon fibers after a sizing agent is removed, which is measured by a single fiber pull-out method, that is, by selecting a liquid crystal polyester having high adhesiveness to the pitch-based carbon fibers, the flexural modulus can be further improved. Examples of the liquid crystal polyester having high adhesiveness to the pitch-based carbon fibers include a liquid crystal polyester including a repeating unit having a planar structure such as a naphthylene group. It is presumed that high adhesiveness can be obtained because the planar structure of the naphthylene group easily interacts with the crystallized carbon structure on the surface of the pitch-based carbon fibers.

For the reasons described above, according to the liquid crystal polyester resin pellets of the present embodiment, a molded article having an excellent flexural modulus can be produced.

The present invention has the following aspects.

"1" Liquid crystal polyester resin pellets, containing:

a liquid crystal polyester; and

pitch-based carbon fibers,

in which a length-weighted average fiber length of the pitch-based carbon fibers is equal to or greater than 100 $\mu$m and smaller than 5 mm,

the liquid crystal polyester has an interfacial shear strength of equal to or greater than 30 MPa and equal to or smaller than 50 MPa with a single fiber of pitch-based carbon fibers after a sizing agent is removed, which is measured by a single fiber pull-out method, and

a content proportion of the pitch-based carbon fibers is equal to or greater than 10 parts by mass and smaller than 120 parts by mass with respect to 100 parts by mass of the liquid crystal polyester.

"2" The liquid crystal polyester resin pellets according to "1",

in which the liquid crystal polyester includes a repeating unit having a 2,6-naphthylene group, and

a content of the repeating unit including a 2,6-naphthylene group is preferably equal to or greater than 10 mol% and equal to or smaller than 90 mol%, more preferably equal to or greater than 15 mol% and equal to or smaller than 80 mol%, and even more preferably equal to or greater than 20 mol% and equal to or smaller than 75 mol% with respect to a total amount of all repeating units.

"3" The liquid crystal polyester resin pellets according to "2",

in which the liquid crystal polyester includes a repeating unit represented by Formula (1), and

a content of the repeating unit represented by Formula (1) is preferably equal to or greater than 10 mol% and equal to or smaller than 90 mol%, more preferably equal to or greater than 15 mol% and equal to or smaller than 70 mol%, and even more preferably equal to or greater than 20 mol% and equal to or smaller than 60 mol% with respect to the total amount of all repeating units,

(1) -O-Ar$^1$-CO-

(in Formula (1), Ar$^1$ represents the 2,6-naphthylene group).

"4" The liquid crystal polyester resin pellets according to any one of "1" to "3",

in which a weight-average molecular weight of the liquid crystal polyester is equal to or greater than 150,000.

"5" The liquid crystal polyester resin pellets according to any one of "1" to "4",

in which a length-weighted average fiber length of the pitch-based carbon fibers is equal to or greater than 120 $\mu$m and equal to or smaller than 4 mm, preferably equal to or greater than 150 $\mu$m and equal to or smaller than 2 mm, more preferably equal to or greater than 170 $\mu$m and equal to or smaller than 1 mm, even more preferably equal to or greater than 180 $\mu$m and equal to or smaller than 500 $\mu$m, and particularly preferably equal to or greater than 180 $\mu$m and equal to or smaller than 300 $\mu$m.

"6" The liquid crystal polyester resin pellets according to any one of "1" to "5",

in which the interfacial shear strength with a single fiber of the pitch-based carbon fibers after a sizing agent is removed is equal to or greater than 32 MPa and equal to or smaller than 50 MPa, more preferably equal to or greater than 34 MPa and equal to or smaller than 50 MPa and even more preferably equal to or greater than 34 MPa and equal to or smaller than 40 MPa.

"7" The liquid crystal polyester resin pellets according to any one of "1" to "6",
in which a content proportion of the pitch-based carbon fibers is preferably equal to or greater than 15 parts by mass and equal to or smaller than 100 parts by mass, more preferably equal to or greater than 18 parts by mass and equal to or smaller than 100 parts by mass, even more preferably equal to or greater than 25 parts by mass and equal to or smaller than 100 parts by mass, still more preferably equal to or greater than 40 parts by mass and equal to or smaller than 100 parts by mass, and particularly preferably equal to or greater than 60 parts by mass and equal to or smaller than 100 parts by mass with respect to 100 parts by mass of the liquid crystal polyester.

"8" The liquid crystal polyester resin pellets according to any one of "1" to "7",
in which a density of the pitch-based carbon fibers is equal to or greater than 2.10 g/cm$^3$ and equal to or smaller than 2.25 g/cm$^3$, preferably equal to or greater than 2.11 g/cm$^3$ and equal to or smaller than 2.20 g/cm$^3$, more preferably equal to or greater than 2.12 g/cm$^3$ and equal to or smaller than 2.20 g/cm$^3$, and even more preferably equal to or greater than 2.13 g/cm$^3$ and equal to or smaller than 2.20 g/cm$^3$.

"9" Liquid crystal polyester resin pellets having a flexural modulus of equal to or greater than 40 GPa, and in a case where, using the liquid crystal polyester resin pellets according to any one of "1" to "8", in accordance with JIS K 7171 (method for determining plastic-flexural characteristics) and ISO178, a test piece having a width of 10 mm, a thickness of 4 mm, and a length of 80 mm is cut out from a multipurpose test piece (type A1) produced by injection molding in accordance with JIS K7139, and using a TENSILON universal material tester RTG-1250 (manufactured by A&D Company, Limited), and a 3-point flexural test is performed 5 times at a test speed of 2 mm/min, a distance between points of 64 mm, and an indenter radius of 5 mm, and the flexural modulus is calculated from the average value.

(Production Method for Liquid Crystal Polyester Resin Pellet)

A production method for the liquid crystal polyester resin pellets of the present embodiment includes a step of melt-kneading the liquid crystal polyester and the pitch-based carbon fibers.

The temperature of melt-kneading is appropriately determined according to the type of the liquid crystal polyester and is preferably set at a temperature higher than the flow starting temperature of the liquid crystal polyester used by 60°C. Decomposition of the liquid crystal polyester starts at equal to or higher than the above-described temperature, and productivity decreases due to strand breakage caused by decomposition gas. In addition, the entry of gas into the pellets deteriorates mechanical properties of the molded article to be produced. On the other hand, in a case of being melt-kneaded at a temperature lower than 60°C, the pitch-based carbon fibers contained therein are easily broken.

In the production method for the liquid crystal polyester resin pellets of the present embodiment, with respect to 100 parts by mass of the liquid crystal polyester, the pitch-based carbon fibers are melt-kneaded preferably equal to or greater than 10 parts by mass, more preferably equal to or greater than 15 parts by mass, even more preferably equal to or greater than 18 parts by mass, still more preferably equal to or greater than 25 parts by mass, particularly preferably equal to or greater than 40 parts by mass, and most preferably equal to or greater than 60 parts by mass.

In addition, with respect to 100 parts by mass of the liquid crystal polyester, the pitch-based carbon fibers are melt-kneaded preferably smaller than 120 parts by mass and more preferably equal to or smaller than 100 parts by mass.

In a case where the blending amount of the pitch-based carbon fibers is equal to or greater than the lower limit value of the above-described preferred range, the adhesiveness between the liquid crystal polyester and the pitch-based carbon fibers is likely to be improved. On the other hand, in a case of being equal to or smaller than the upper limit value of the above-described preferred range, the pitch-based carbon fibers can be quantitatively supplied, and the productivity of the liquid crystal polyester resin pellets is improved.

In the production method for the liquid crystal polyester resin pellets of the present embodiment, depending on the characteristics required for the liquid crystal polyester resin pellets, and the like, for example, with respect to 100 parts by mass of the liquid crystal polyester, the pitch-based carbon fibers are melt-kneaded preferably equal to or greater than 10 parts by mass and smaller than 120 parts by mass, more preferably equal to or greater than 15 parts by mass and equal to or smaller than 100 parts by mass, even more preferably equal to or greater than 18 parts by mass and equal to or smaller than 100 parts by mass, still more preferably equal to or greater than 25 parts by mass and equal to or smaller than 100 parts by mass, particularly preferably equal to or greater than 40 parts by mass and equal to or smaller than 100 parts by mass, and most preferably equal to or greater than 60 parts by mass and equal to or smaller than 100 parts by mass.

The melt-kneaded liquid crystal polyester resin composition is picked up according to a conventional method and cooled to, for example, 50°C to 150°C, and the strand-shaped resin structural body is cut to a desired length in a longitudinal direction thereof to produce liquid crystal polyester resin pellets. The cooling time is not particularly limited, but is, for example, 3 to 30 seconds.

The liquid crystal polyester resin pellets are liquid crystal polyester resin pellets in which the pitch-based carbon fibers are solidified with a thermoplastic resin including the liquid crystal polyester. A length of the liquid crystal polyester resin pellets produced in the present embodiment is, for example, equal to or greater than 1 mm and smaller than 50 mm, and may be 1.5 to 48 mm or 2 to 46 mm.

Examples of the production method for the liquid crystal polyester resin pellets include a method of dry-blending the liquid crystal polyester and the pitch-based carbon fibers and melt-kneading them, and a method of supplying the pitch-based carbon fibers to a molten liquid crystal polyester resin.

In particular, since dispersibility and length-weighted average fiber length of the pitch-based carbon fibers can be controlled and the effects of the present invention can be obtained, a method of supplying the pitch-based carbon fibers to a molten liquid crystal polyester resin is preferable. Specifically, the liquid crystal polyester resin may be supplied from a main raw material feeder installed upstream of an extruder, the pitch-based carbon fibers may be supplied from a side feeder installed downstream of the extruder, and the mixture is melt-kneaded.

An extruder may be used for melt-kneading to produce the liquid crystal polyester resin pellets.

Examples of the extruder include a single-screw extruder and a twin-screw extruder, and from the viewpoint of productivity, a twin-screw extruder can be preferably used.

In a case of the twin-screw extruder, a screw rotation speed of the extruder is preferably equal to or greater than 50 rpm and smaller than 200 rpm. In a case where the screw rotation speed of the extruder is equal to or greater than 50 rpm, dispersibility of the pitch-based carbon fibers is excellent. In addition, in a case where the screw rotation speed of the extruder is smaller than 200 rpm, breakage of the pitch-based carbon fibers can be suppressed.

In a case where the pitch-based carbon fibers are supplied to the molten liquid crystal polyester, the screw of the extruder is preferably provided with one or more kneading zones before the supply of the pitch-based carbon fibers. By providing the kneading zone before the supply, the viscosity of the liquid crystal polyester is lowered due to the influence of shearing by the kneading element, and the dispersibility and length-weighted average fiber length of the pitch-based carbon fibers can be controlled. In a case where the kneading zone is provided after the supply, the pitch-based carbon fibers may break due to shearing in the kneading zone, and it may be difficult to control the length-weighted average fiber length.

From the viewpoint of easy quantitative supply and controllability of length-weighted average fiber length in the pellets, a cut length of the pitch-based carbon fibers used in the production of the liquid crystal polyester resin pellets is preferably equal to or greater than 2 mm, more preferably equal to or greater than 3 mm, even more preferably equal to or greater than 4 mm, and particularly preferably equal to or greater than 5 mm.

In addition, from the viewpoint of easy quantitative supply and controllability of length-weighted average fiber length in the pellets, the cut length of the pitch-based carbon fibers is preferably equal to or smaller than 25 mm, more preferably equal to or smaller than 20 mm, even more preferably equal to or smaller than 15 mm, and particularly preferably equal to or smaller than 10 mm.

For example, the cut length of the pitch-based carbon fibers used in the production of the liquid crystal polyester resin pellets is preferably equal to or greater than 2 mm and equal to or smaller than 25 mm, more preferably equal to or greater than 3 mm and equal to or smaller than 20 mm, even more preferably equal to or greater than 4 mm and equal to or smaller than 15 mm, and particularly preferably equal to or greater than 5 mm and equal to or smaller than 10 mm.

(Liquid Crystal Polyester Resin Molded Article)

A liquid crystal polyester resin molded article of the present embodiment is a liquid crystal polyester resin molded article containing a liquid crystal polyester and pitch-based carbon fibers, in which a length-weighted average fiber length of the pitch-based carbon fibers is equal to or greater than 100 $\mu$m, and the liquid crystal polyester has an interfacial shear strength of equal to or greater than 30 MPa with a single fiber of pitch-based carbon fibers after a sizing agent is removed, which is measured by a single fiber pull-out method.

A density of the above-described pitch-based carbon fibers in the liquid crystal polyester resin molded article of the present embodiment is preferably equal to or greater than 2.10 g/cm$^3$, and the details thereof are the same as the density of the above-described pitch-based carbon fibers in the above-described liquid crystal polyester resin pellets. It can be said that the density of the pitch-based carbon fibers in the liquid crystal polyester resin molded article obtained through a step of molding a molded article using the liquid crystal polyester resin pellets does not change from the density of the above-described pitch-based carbon fibers in the above-described liquid crystal polyester resin pellets.

In a case where a length-weighted average fiber length of the pitch-based carbon fibers in the above-described liquid crystal polyester resin pellets is equal to or greater than 100 $\mu$m, a length-weighted average fiber length of the above-described pitch-based carbon fibers in the liquid crystal polyester resin molded article obtained through a step of molding a molded article using the liquid crystal polyester resin pellets can be equal to or greater than 100 $\mu$m, and can be excellent in mechanical strength such as flexural modulus.

The length-weighted average fiber length of the pitch-based carbon fibers in the liquid crystal polyester resin molded article is preferably equal to or greater than 120 $\mu$m and more preferably equal to or greater than 140 $\mu$m.

In addition, the length-weighted average fiber length of the pitch-based carbon fibers in the liquid crystal polyester resin molded article is preferably smaller than 2 mm, more preferably equal to or smaller than 1 mm, even more preferably equal to or smaller than 500 $\mu$m, particularly preferably equal to or smaller than 300 $\mu$m, and most preferably equal to or smaller than 250 $\mu$m.

For example, the length-weighted average fiber length of the pitch-based carbon fibers in the above-described liquid crystal polyester resin pellets is preferably equal to or greater than 100 $\mu$m and smaller than 2 mm, more preferably equal to or greater than 120 $\mu$m and equal to or smaller than 1 mm, even more preferably equal to or greater than 140 $\mu$m and equal to or smaller than 1 mm, still more preferably equal to or greater than 140 $\mu$m and equal to or smaller than 300 $\mu$m, and particularly preferably equal to or greater than 140 $\mu$m and equal to or smaller than 250 $\mu$m.

The length-weighted average fiber length of the pitch-based carbon fibers in the liquid crystal polyester resin molded article of the present embodiment can be measured by the same method as in the length-weighted average fiber length of the pitch-based carbon fibers in the liquid crystal polyester resin pellets described above.

Through the step of molding a molded article using the above-described liquid crystal polyester resin pellets, a liquid crystal polyester resin molded article having excellent tensile strength can be obtained. The tensile strength of the liquid crystal polyester resin molded article is preferably equal to or greater than 100 MPa, more preferably equal to or greater than 125 MPa, even more preferably equal to or greater than 150 MPa, and particularly preferably 160 MPa.

The tensile strength means a value measured in accordance with JIS K 7161 (test method for plastic-tensile properties) and ISO 527.

A tensile strength strain of the liquid crystal polyester resin molded article is preferably equal to or greater than 0.5%, more preferably equal to or greater than 1.5%, and even more preferably equal to or greater than 3.0%.

The tensile strength strain means a value measured in accordance with JIS K 7161 (test method for plastic-tensile properties) and ISO 527.

Through the step of molding a molded article using the above-described liquid crystal polyester resin pellets, a liquid crystal polyester resin molded article having excellent flexural modulus can be obtained. The flexural modulus of the liquid crystal polyester resin molded article is preferably equal to or greater than 20 GPa, more preferably equal to or greater than 28 GPa, and even more preferably equal to or greater than 39 GPa.

The flexural modulus means a value measured in accordance with JIS K 7171 (method for determining plastic-flexural characteristics) and ISO 178.

Through the step of molding a molded article using the above-described liquid crystal polyester resin pellets, a liquid crystal polyester resin molded article having excellent flexural strength can be obtained. The flexural strength of the liquid crystal polyester resin molded article is preferably equal to or greater than 185 MPa, more preferably equal to or greater than 200 MPa, and even more preferably equal to or greater than 250 MPa.

The flexural strength means a value measured in accordance with JIS K 7171 (method for determining plastic-flexural characteristics) and ISO 178.

(Production Method for Liquid Crystal Polyester Resin Molded Article)

A production method for the liquid crystal polyester resin molded article of the present embodiment includes a step of molding the molded article using the above-described liquid crystal polyester resin pellets. The liquid crystal polyester resin pellets can be molded by a known molding method. As the production method for the liquid crystal polyester resin molded article of the present embodiment, a melt molding method is preferable, and examples thereof include injection molding methods, extrusion molding methods such as a T-die method or an inflation method, compression molding methods, blow molding methods, vacuum molding methods, and press molding. Among these, an injection molding method is preferable.

For example, in a case where the above-described liquid crystal polyester resin pellets are used as a molding material and molded by an injection molding method, the liquid crystal polyester resin pellets are melted using a known injection molding machine and the melted liquid crystal polyester resin composition is molded by injection into a mold.

Examples of known injection molding machines include TR450EH3 manufactured by Sodick Co., Ltd. and the PS40E5ASE model hydraulic horizontal molding machine manufactured by Nissei Plastic Industrial Co., Ltd. Examples of the type of the injection molding machine include an in-line type injection molding machine with integrated pellet plasticization part and injection part, and a pre-plasticating type injection molding machine with independent pellet plasticization part and injection part. A pre-plasticating type injection molding machine is preferable because there is no check valve and the injection pressure can be reduced. Examples of the pre-plasticating type injection molding machine include TR450EH3 manufactured by Sodick Co., Ltd.

A cylinder temperature of the injection molding machine is appropriately determined according to the type of the liquid crystal polyester and is preferably set at a temperature higher than the flow starting temperature of the liquid crystal polyester used by 10°C to 80°C, for example, 300°C to 400°C.

From the viewpoint of cooling speed and productivity of the liquid crystal polyester resin composition, a mold temperature is preferably set in a range of room temperature (for example, 23°C) to 180°C.

The molded article obtained by the above-described production method of the present embodiment applied to any application to which the liquid crystal polyester resin is applicable in general and is particularly suitable for applications in the automotive field.

Examples of applications in the automotive field include, as an injection-molded article for automobile interior materials, injection-molded articles for ceiling materials, injection-molded articles for wheelhouse covers, injection-molded articles for trunk compartment linings, injection-molded articles for instrument panel surface materials, injection-molded articles for steering wheel covers, injection-molded articles for armrests, injection-molded articles for headrests, injection-molded articles for seat belt covers, injection-molded articles for shift lever boots, injection-molded articles for console boxes, injection-molded articles for horn pads, injection-molded articles for knobs, injection-molded articles for airbag covers, injection-molded articles for various trims, injection-molded articles for various pillars, injection-molded articles for door lock bezels, injection-molded articles for grab boxes, injection-molded articles for defroster nozzles, injection-molded articles for scuff plates, injection-molded articles for steering wheels, and injection-molded articles for steering column covers.

In addition, examples of applications in the automotive field include, as an injection-molded article for automobile exterior materials, injection-molded articles for bumpers, injection-molded articles for spoilers, injection-molded articles for mudguards, injection-molded articles for side moldings, injection-molded articles for radiator grills, injection-molded articles for wheel covers, injection-molded articles for wheel caps, injection-molded articles for cowl belts and grills, injection-molded articles for air outlets and louvers, injection-molded articles for air scoops, injection-molded articles for hood bulges, injection-molded articles for fenders, and injection-molded articles for back doors.

Examples thereof include, as a part in the engine room for automobiles, injection-molded articles for cylinders and head covers, injection-molded articles for engine mounts, injection-molded articles for air intake manifolds, injection-molded articles for throttle bodies, injection-molded articles for air intake pipes, injection-molded articles for radiator tanks, injection-molded articles for radiator support, injection-molded articles for water pump and inlet, injection-molded articles for water pump and outlet, injection-molded articles for thermostat housing, injection-molded articles for cooling fan, injection-molded articles for fan shroud, injection-molded articles for oil pan, injection-molded articles for oil filter housing, injection-molded articles for oil filler cap, injection-molded articles for oil level gauge, injection-molded articles for timing belt, injection-molded articles for timing belt cover, and injection-molded articles for engine covers. Examples thereof include, as a fuel component for automobiles, fuel caps, fuel filler tubes, automotive fuel tanks, fuel sender modules, fuel cutoff valves, quick connectors, canisters, fuel delivery pipes, and fuel filler necks.

Examples thereof include, as a drive train component for automobiles, shift lever housing and propeller shaft.

Examples thereof include, as a part of a chassis for automobiles, a stabilizer and linkage rod.

Examples of other injection-molded articles for automobile parts include injection-molded articles for automobile headlamps, injection-molded articles for glass run channels, injection-molded articles for weather strips, injection-molded articles for hoses such as injection-molded articles for drain hoses and injection-molded articles for windshield washer tubes, injection-molded articles for tubes, injection-molded articles for rack and pinion boots, and injection-molded articles for gaskets. Among these, the molded article of the present embodiment can be preferably used for members in which rigidity is required.

In addition, in addition to the above, it is also possible to apply the molded article of the present embodiment to applications such as sensors, LED lamps, connectors, sockets, resistors, relay cases, switches, coil bobbins, capacitors, variable condenser cases, optical pickups, oscillators, various terminal boards, transformers, plugs, printed circuit boards, tuners, speakers, microphones, headphones, small motors, magnetic head bases, power modules, semiconductors, liquid crystal displays, FDD carriages, FDD chassis, motor brush holders, parabolic antennas, computer related parts, microwave oven parts, sound and voice equipment parts, lighting parts, air conditioner parts, office computer related parts, telephone and fax-related parts, and copier-related parts.

[Examples]

Hereinafter, the present invention will be described in more detail with reference to specific examples. However, the present invention is not limited to the examples shown below.

[Flow starting temperature of Liquid Crystal Polyester]

First, using a flow tester ("CFT-500 type" of Shimadzu Corporation), approximately 2 g of a liquid crystal polyester was filled into a cylinder equipped with a die having a nozzle with an inner diameter of 1 mm and a length of 10 mm. Next, the liquid crystal polyester was melted and extruded from the nozzle while the temperature was increased at a rate of 4°C/min under a load of 9.8 MPa (100 kg/cm$^2$) to measure a temperature (flow starting temperature) indicating a viscosity of 4,800 Pa·s (48,000 poise), and the temperature was used as a flow starting temperature of the liquid crystal polyester.

[Weight-average Molecular Weight of Liquid Crystal Polyester]

A weight-average molecular weight of the liquid crystal polyester was measured by gel permeation chromatography (GPC) under the following conditions.

(1) Pretreatment method

Approximately 2 mL of pentafluorophenol (PFP) was added to approximately 4.86 mg of a sample, and the mixture was heated and stirred for 2 hours, and then cooled to 40° to 50°C while stirring. Approximately 4.24 mL of chloroform was added thereto while stirring, and the solution after being filtered through a 0.45 $\mu$m membrane filter was used as a measurement solution.

(2) GPC equipment

HLC8220GPC manufactured by Tosoh Corporation

(3) Measurement conditions

Column: TSKgel SuperHM-H $\times$ 2
(6.0 mml.d. $\times$ 150 mm $\times$ 2)
Eluent: pentafluorophenol (PFP) / chloroform (weight ratio: 35/65)
Flow rate: 0.4 mL/min
Detector: Refractive Index (RI) detector
Column temperature: 40°C
Injection volume: 20 $\mu$L
Molecular weight standard: standard polystyrene

<Method for Measuring Interfacial Shear Strength>

An interfacial shear strength of the liquid crystal polyester was measured as follows with reference to the description in "Makoto Kanai, Kazuo Kageyama, Tsuyoshi Matsuo, Go Masuda, "Evaluation of bond strength for CF/PA6 interface by means of pinhole type single fiber pull-out test", Proceedings of the 9th Japan Conference on Composite Materials, 1D-09 (February 2018)".

(Single Fiber of Pitch-based Carbon Fibers after Sizing Agent is Removed)

Pitch-based carbon fibers (DIALEAD (registered trademark) K13916, single fiber diameter: 11 $\mu$m, tensile strength: 3000 MPa, tensile elastic modulus: 760 GPa, density: 2.2 g/cm$^3$) manufactured by Mitsubishi Chemical Co., Ltd. were immersed in an acetone solution for 24 hours to remove a sizing agent on the surface, and a single fiber of the pitch-based carbon fibers was prepared for measuring the interfacial shear strength.

(Pinhole pull-out test piece)

An iron plate having a length of 16 mm, a width of 4 mm, and a thickness of 0.2 mm, in which a pinhole having a diameter of 0.15 mm was formed, was prepared.
The iron plate with a pinhole was connected to a heater, and the liquid crystal polyester to be evaluated was heated to a temperature of the flow starting temperature + 60°C. Specifically, the liquid crystal polyester to be evaluated, which had been processed into pellets, was placed on the iron plate with a pinhole, which had been heated to the flow starting temperature + 60°C, and the liquid crystal polyester was melted at the flow starting temperature + 60°C and melted into the pinhole. Thereafter, the liquid crystal polyester was naturally cooled.
One single fiber of the pitch-based carbon fibers immersed in the acetone for 24 hours was temporarily fixed to a metal rod having a diameter of 0.3 mm and attached to a tip of a load cell of an extraction tester.
The liquid crystal polyester melted into the pinhole was melted again at a temperature of the flow starting temperature + 60°C.
Thereafter, the load cell was lowered at a speed of 1 mm/min to bring it closer to the pinhole, and the one single fiber of the pitch-based carbon fibers was embedded in the liquid crystal polyester melted in the pinhole at the flow starting temperature + 60°C.

While checking whether the single fiber of the pitch-based carbon fibers was embedded in the liquid crystal polyester of the pinhole with two microscopes attached to the side, an embedding depth was controlled to be approximately 100 μm.

Thereafter, the heater was turned off and a fan was turned to forcibly cool to normal temperature (25°C). After cooling to normal temperature (25°C), the temporarily fixed metal rod was removed to produce a pinhole extraction test piece.

The pinhole pull-out test piece was stored in a desiccator with a humidity of 5% for 8 hours or more until just before the test.

(Measurement of Interfacial Shear Strength)

The single fiber of the pitch-based carbon fibers, embedded in the liquid crystal polyester, was pulled under the condition of an extraction speed of 0.03 mm/min, and displacement and load were measured.

A load [mN] and displacement [μm] curve was plotted, and the interfacial shear strength was obtained from the maximum load value obtained from the following expression.

$$\text{Interfacial Shear Strength [MPa]} = (\text{Maximum load [mN]} \times 1000)/(\pi \times \text{Diameter [μm] of single fiber} \times \text{Embedding depth [μm]})$$

As the diameter of the single fiber, the pitch-based carbon fibers were observed with a microscope (500 times), and the number-average value of measured fiber diameters for 500 randomly selected pitch-based carbon fibers was adopted.

As the embedding depth, the displacement of the testing machine from the start position of the extraction test with zero load until the fiber came out from the surface of the resin was used.

The measurement was performed 5 times, and the average value of the 5 measurements was defined as the interfacial shear strength.

The interfacial shear strength of the liquid crystal polyester with respect to PAN-based carbon fibers was measured using PAN-based carbon fibers (trade name: PyROFIL CF tow, single fiber diameter: 7 μm, tensile strength: 4,900 MPa, tensile elastic modulus: 236 GPa, density: 1.82 g/cm³) manufactured by Mitsubishi Chemical Co., Ltd. in the same manner as in the case of using the pitch-based carbon fibers.

Interfacial shear strengths of the liquid crystal polyesters 1 to 6 described below, obtained by the above-described method, are shown in Tables 1 to 4 as "Interfacial shear strength".

<Production of Liquid Crystal Polyester 1>

(1) Melt Polymerization

1034.99 g of 6-hydroxy-2-naphthoic acid (5.5 mol), 378.33 g of 2,6-naphthalenedicarboxylic acid (1.75 mol), 83.07 g of terephthalic acid (0.5 mol), 272.52 g of hydroquinone (2.475 mol, 0.225 mol excess with respect to the total amount of 2,6-naphthalenedicarboxylic acid and terephthalic acid), 1226.87 g of acetic anhydride (12 mol), and 0.17 g 1-methylimidazole as a catalyst were placed in a reaction vessel equipped with a stirring device, a torque meter, a nitrogen-introducing pipe, a thermometer, and a reflux condenser, the gas in the reaction vessel was replaced with nitrogen gas, and then the temperature was increased from room temperature to 145°C over 15 minutes while stirring under a nitrogen gas stream and refluxing was carried out at 145°C for 1 hour.

Next, while distilling off byproduct acetic acid and unreacted acetic anhydride, the temperature was increased from 145°C to 310°C over 3.5 hours and maintained at 310°C for 3 hours, and then the resultant was extracted from the reaction vessel and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 250°C over 1 hour, heated from 250°C to 310°C over 10 hours, and held at 310°C for 5 hours to perform a solid phase polymerization. After the solid phase polymerization, a powder-like liquid crystal polyester 1 was obtained by cooling.

With respect to a total amount of all repeating units, the liquid crystal polyester 1 had 55 mol% of the repeating unit (1) in which Ar[1] was a 2,6-naphthylene group, 17.5 mol% of the repeating unit (2) in which Ar[2] was a 2,6-naphthylene group, 5 mol% of the repeating unit (3) in which Ar[2] was a 1,4-phenylene group, and 22.5 mol% of the repeating unit (4) in which Ar[4] was a 1,4-phenylene group.

The flow starting temperature of the liquid crystal polyester 1 was 320°C, and the weight-average molecular weight was 170,000. In addition, in the liquid crystal polyester 1, the interfacial shear strength with a single fiber of pitch-based carbon fibers after a sizing agent was removed, which was measured by a single fiber pull-out method, was 38 MPa. Similarly, in the liquid crystal polyester 1, the interfacial shear strength with a single fiber of PAN-based carbon fibers after a sizing agent was removed, which was measured by a single fiber pull-out method, was 38 MPa.

<Production of Liquid Crystal Polyester 2>

(1) Melt Polymerization

1034.99 g of 6-hydroxy-2-naphthoic acid (5.5 mol), 378.33 g of 2,6-naphthalenedicarboxylic acid (1.75 mol), 83.07 g of terephthalic acid (0.5 mol), 272.52 g of hydroquinone (2.475 mol, 0.225 mol excess with respect to the total amount of 2,6-naphthalenedicarboxylic acid and terephthalic acid), 1226.87 g of acetic anhydride (12 mol), and 0.17 g 1-methylimidazole as a catalyst were placed in a reaction vessel equipped with a stirring device, a torque meter, a nitrogen-introducing pipe, a thermometer, and a reflux condenser, the gas in the reaction vessel was replaced with nitrogen gas, and then the temperature was increased from room temperature to 145°C over 15 minutes while stirring under a nitrogen gas stream and refluxing was carried out at 145°C for 1 hour.

Next, while distilling off byproduct acetic acid and unreacted acetic anhydride, the temperature was increased from 145°C to 310°C over 3.5 hours and maintained at 310°C for 3 hours, and then the resultant was extracted from the reaction vessel and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 250°C over 1 hour, heated from 250°C to 295°C over 8 hours, and held at 295°C for 6 hours to perform a solid phase polymerization. After the solid phase polymerization, a powder-like liquid crystal polyester 2 was obtained by cooling. With respect to a total amount of all repeating units, the liquid crystal polyester 2 had 55 mol% of the repeating unit (1) in which Ar[1] was a 2,6-naphthylene group, 17.5 mol% of the repeating unit (2) in which Ar[2] was a 2,6-naphthylene group, 5 mol% of the repeating unit (3) in which Ar[3] was a 1,4-phenylene group, and 22.5 mol% of the repeating unit (4) in which Ar[4] was a 1,4-phenylene group.

The flow starting temperature of the liquid crystal polyester 2 was 300°C, and the weight-average molecular weight was 100,000. In addition, in the liquid crystal polyester 2, the interfacial shear strength with a single fiber of pitch-based carbon fibers after a sizing agent was removed, which was measured by a single fiber pull-out method, was 20 MPa.

<Production of Liquid Crystal Polyester 3>

(1) Melt Polymerization

994.5 g of p-hydroxybenzoic acid (7.2 mol), 446.9 g of 4,4'-dihydroxybiphenyl (2.4 mol), 299.0 g of terephthalic acid (1.8 mol), 99.7 g of isophthalic acid (0.6 mol), and 1347.6 g of acetic anhydride (13.2 mol) were charged in a reaction vessel equipped with a stirring device, a torque meter, a nitrogen-introducing pipe, a thermometer, and a reflux condenser, 0.2 g of 1-methylimidazole was added thereto, and the inside of the reaction vessel was thoroughly replaced with nitrogen gas. Then, the temperature was increased from room temperature to 150°C over 30 minutes under a nitrogen gas stream, and the temperature was maintained at 150°C and refluxed for 1 hour.

Next, 0.9 g of 1-methylimidazole was added thereto, the temperature was raised from 150°C to 320°C over 2 hours and 50 minutes while distilling off byproduct acetic acid and unreacted acetic anhydride, the point where an increase in torque was observed was set as the end of the reaction, and the contents were extracted and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 250°C over 1 hour, heated from 250°C to 285°C over 5 hours, and held at 285°C for 3 hours to perform a solid phase polymerization. After the solid phase polymerization, a powder-like liquid crystal polyester 3 was obtained by cooling. With respect to a total amount of all repeating units, the liquid crystal polyester 3 had 60 mol% of the repeating unit (1) in which $Ar^1$ was a 1,4-phenylene group, 5.0 mol% of the repeating unit (2) in which $Ar^2$ was a 1,3-phenylene group, 15 mol% of the repeating unit (3) in which $Ar^3$ was a 1,4-phenylene group, and 20 mol% of the repeating unit (4) in which $Ar^4$ was a 4,4-biphenylene group.

The flow starting temperature of the liquid crystal polyester 3 was 320°C, and the weight-average molecular weight was 150,000. In addition, in the liquid crystal polyester 3, the interfacial shear strength with a single fiber of pitch-based carbon fibers after a sizing agent was removed, which was measured by a single fiber pull-out method, was 19 MPa.

<Production of Liquid Crystal Polyester 4>

(1) Melt Polymerization

994.5 g of p-hydroxybenzoic acid (7.2 mol), 446.9 g of 4,4'-dihydroxybiphenyl (2.4 mol), 299.0 g of terephthalic acid (1.8 mol), 99.7 g of isophthalic acid (0.6 mol), and 1347.6 g of acetic anhydride (13.2 mol) were charged in a reaction vessel equipped with a stirring device, a torque meter, a nitrogen-introducing pipe, a thermometer, and a reflux condenser, 0.2 g of 1-methylimidazole was added thereto, and the inside of the reaction vessel was thoroughly replaced with nitrogen gas. Then, the temperature was increased from room temperature to 150°C over 30 minutes under a nitrogen gas stream, and the temperature was maintained at 150°C and refluxed for 1 hour.

Next, 0.9 g of 1-methylimidazole was added thereto, the temperature was raised from 150°C to 320°C over 2 hours and 50 minutes while distilling off byproduct acetic acid and unreacted acetic anhydride, the point where an increase in torque was observed was set as the end of the reaction, and the contents were extracted and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 250°C over 1 hour, heated from 250°C to 265°C over 2.5 hours, and held at 265°C for 3 hours to perform a solid phase polymerization. After the solid phase polymerization, a powder-like liquid crystal polyester 4 was obtained by cooling. With respect to a total amount of all repeating units, the liquid crystal polyester 4 had 60 mol% of the repeating unit (1) in which $Ar^1$ was a 1,4-phenylene group, 5.0 mol% of the repeating unit (2) in which $Ar^2$ was a 1,3-phenylene group, 15 mol% of the repeating unit (3) in which $Ar^3$ was a 1,4-phenylene group, and 20 mol% of the repeating unit (4) in which $Ar^4$ was a 4,4-biphenylene group.

The flow starting temperature of the liquid crystal polyester 4 was 290°C, and the weight-average molecular weight was 60,000. In addition, in the liquid crystal polyester 4, the interfacial shear strength with a single fiber of pitch-based carbon fibers after a sizing agent was removed, which was measured by a single fiber pull-out method, was 19 MPa.

<Production of Liquid Crystal Polyester 5>

(1) Melt Polymerization

Using a 3 liter four-necked separable flask including a Dimroth condenser, a distilling head including a nitrogen-introducing pipe and a thermocouple for the measurement of an inner temperature attached thereto, and an anchor shaped stirrer, and also including a thermocouple attached to the outside of the flask, 1207.3 g (8.74 mol) of 4-hydroxybenzoic acid, 608.4 g (3.23 mol) of 6-hydroxy-2-naphthoic acid, and 1345 g (13.2 mol) of acetic anhydride were charged into a polymerization tank. Under a nitrogen gas flow, the outer temperature of the flask was increased to 150°C by a mantle heater, and then an acetylation reaction was performed under reflux for approximately 3 hours while stirring at 200 rpm.

Following the acetylation reaction, the temperature was increased at 1°C/min and maintained at 310°C to perform a melt polycondensation. During this reaction, acetic acid produced as a by-product in the polycondensation reaction was continuously distilled off. Sampling was performed 30 minutes after reaching 310°C during the polymerization, and the flow starting temperature was measured and found to be 230°C. After 35 minutes from reaching 230°C, stirring was stopped, and the contents were taken out and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 180°C over 3 hours, held at 180°C for 2 hours, further heated to 250°C over 7.5 hours, and held at 250°C for 5 hours to perform a solid phase polymerization. After the solid phase polymerization, a powder-like liquid crystal polyester 5 was obtained by cooling.

With respect to a total amount of all repeating units, the liquid crystal polyester 5 had 73 mol% of the repeating unit (1) in which $Ar^1$ was a 1,4-phenylene group and 27 mol% of the repeating unit (1) in which $Ar^1$ was a 2,6-naphthylene group.

The flow starting temperature of the liquid crystal polyester 5 was 262°C, and the weight-average molecular weight was 160,000. In addition, in the liquid crystal polyester 5, the interfacial shear strength with a single fiber of pitch-based carbon fibers after a sizing agent was removed, which was measured by a single fiber pull-out method, was 30 MPa.

<Production of Liquid Crystal Polyester 6>

(1) Melt Polymerization

A reaction vessel equipped with a stirring device, a torque meter, a nitrogen gas introduction pipe, a thermometer, and a reflux condenser was charged with 940.9 g (5.0 mol) of 6-hydroxy-2-naphthoic acid, 377.9 g (2.5 mol) of acetaminophen, 415.3 g (2.5 mol) of isophthalic acid, and 867.8 g (8.4 mol) of acetic anhydride. After replacing the gas inside the reaction vessel with nitrogen gas, the temperature was increased from room temperature to 140°C over 60 minutes under a stream of nitrogen gas with constant stirring, and the mixture was refluxed at 140°C for 3 hours. Subsequently, while distilling off byproduct acetic acid and unreacted acetic anhydride, the temperature was increased from 150°C to 300°C over 5 hours, and the mixture was held at 300°C for 30 minutes, and then taken out from the reaction vessel and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 160°C over 2 hours and 20 minutes, heated from 160°C to 180°C over 3 hours and 20 minutes, and held at 180°C for 5 hours to perform a solid phase polymerization. After the solid phase polymerization, a powder-like liquid crystal polyester 6 was obtained by cooling and then pulverizing with a pulverizer.

With respect to a total amount of all repeating units, the liquid crystal polyester 6 had 50 mol% of the repeating unit (1) in which $Ar^1$ was a 2,6-naphthylene group, 25 mol% of the repeating unit (2) in which $Ar^2$ was a 1,3-phenylene group, and 25 mol% of a repeating unit derived from acetaminophen.

The flow starting temperature of the liquid crystal polyester 6 was 220°C, and the weight-average molecular weight was 21,000. In addition, in the liquid crystal polyester 6, the interfacial shear strength with a single fiber of pitch-based carbon fibers after a sizing agent was removed, which was measured by a single fiber pull-out method, was 32 MPa.

<Method for Measuring Length-weighted Average Fiber Length>

A length-weighted average fiber length of the pitch-based carbon fibers and the PAN-based carbon fibers in a resin pellet and an injection-molded test piece (that is, a molded article) was measured by the following measuring method.

    (1) First, as a test sample, from a central portion of a multipurpose test piece (type A1) conforming to JIS K 7139, a width of 10 mm × a length of 20 mm × a thickness of 4 mm was cut out. In addition, approximately 5 g of resin pellets were selected. These test samples were sintered in a muffle furnace to remove a resin component. Here, firing conditions were 500°C and 3 hours.

    (2) A carbon fiber dispersion liquid was produced by dispersing only carbon fibers (pitch-based carbon fibers or PAN-based carbon fibers) in 500 mL of an aqueous solution containing 0.05 volume% of a surfactant (Micro90 manufactured by INTERNATIONAL PRODUCTS CORPORATION).

    (3) 50 mL was extracted from the 500 mL dispersion liquid and filtered under reduced pressure using a filter paper for a KIRIYAMA ROHTO (No. 5C) having a diameter of 90 mm, the carbon fibers dispersed on the filter paper were observed with a microscope (VH-ZST manufactured by KEYENCE CORPORATION), and 5 images at a magnification of 100 times (in a case of a resin pellet sample and a molded article sample) were captured for each sample.

    (4) All of the 5 captured images were binarized with image-processing software (WinROOF2018 manufactured by MITANI CORPORATION), and the fiber length of the carbon fibers was measured.

(Method for Measuring Fiber Length)

(a) A monochrome pixel conversion processing was performed on the captured images.
(b) A binarization processing was performed so that the captured carbon fibers were colored.
(c) A measurement of the fiber length of the carbon fibers was performed using a needle-shaped separation function of the image-processing software.
(d) The fiber lengths of the carbon fibers and curved carbon fibers which could not be binarized in (c) were measured by multi-point measurement.

However, in (c) and (d), carbon fibers of 10 $\mu$m or less were judged to be noise and were not included in the measured number of carbon fibers n. In a case where n > 500, that is, the number n of carbon fibers to be measured did not exceed 500, the process returned to (3), additional images were captured, and the measurement was performed until n exceeds 500.

(5) From the fiber length of the fibrous filler (carbon fibers) in the 5 images, the length-weighted average fiber length $1m = (\Sigma li^2 \times ni) / (\Sigma li \times ni)$ was determined ($\Sigma ni > 500$).

li: fiber length of carbon fibers
ni: number of carbon fibers having fiber length li

Length-weighted average fiber lengths of the fibrous fillers (pitch-based carbon fibers or PAN-based carbon fibers) in the liquid crystal polyester resin pellets of each example described later and in the injection-molded test piece (that is, the molded article), which were determined by the above-described method, are shown in Tables 1 to 4.

<Production of Liquid Crystal Polyester Resin Pellets>

(Example 1)

The liquid crystal polyester 1 obtained in the above <Production of Liquid Crystal Polyester 1> and pitch-based carbon fibers 1 (manufactured by Mitsubishi Chemical Co., Ltd., DIALEAD (registered trademark) K223HE, cut length: 6 mm, tensile strength: 3,800 MPa, tensile elastic modulus: 900 GPa, density: 2.20 g/cm$^3$) were supplied to a twin-screw extruder (manufactured by Ikegai Corp., "PCM30-HS", cylinder temperature: 380°C, screw rotation speed: 100 rpm) with a main raw material feeder in the upstream part and a side feeder in the downstream part in a proportion of a blending amount of 100 parts by mass to 82 parts by mass such that the liquid crystal polyester was supplied from the main raw material feeder and the pitch-based carbon fibers 1 were supplied from the side feeder, and after melt-kneading, liquid crystal polyester resin pellets of Example 1, having a cylindrical shape (length: 3 mm) and formed of a liquid crystal polyester resin composition, were produced.

The length-weighted average fiber length of the fibrous fillers (pitch-based carbon fibers 1) included in the pellets was 192 $\mu$m.

(Comparative Example 1)

The liquid crystal polyester 1 and the pitch-based carbon fibers 1 were blended with a tumbler in a proportion of a blending amount of 100 parts by mass to 82 parts by mass, and were collectively charged from the main raw material feeder of the twin-screw extruder according to Example 1, and the mixture was melt-kneaded under the conditions of a cylinder temperature of 340°C and a screw rotation speed of 200 rpm to obtain liquid crystal polyester resin pellets of Comparative Example 1, having a cylindrical shape (length: 3 mm) and formed of a liquid crystal polyester resin composition.

The length-weighted average fiber length of the pitch-based carbon fibers 1 in the pellets was 88 $\mu$m.

(Comparative Example 2)

The liquid crystal polyester 1 obtained in the above <Production of Liquid Crystal Polyester 1> and PAN-based carbon fibers 1 (manufactured by Mitsubishi Chemical Co., Ltd., PyROFIL(registered trademark) CF chop, TR03M, cut length: 6 mm, tensile strength: 3,700 MPa, tensile elastic modulus: 220 GPa, density: 1.82 g/cm$^3$) were supplied to a twin-screw extruder (manufactured by Ikegai Corp., "PCM30-HS", cylinder temperature: 380°C, screw rotation speed: 100 rpm) with a main raw material feeder in the upstream part and a side feeder in the downstream part in a proportion of a blending amount of 100 parts by mass to 82 parts by mass such that the liquid crystal polyester was supplied from the main raw material feeder and the PAN-based carbon fibers 1 were supplied from the side feeder, and after melt-kneading, liquid crystal polyester resin pellets of Comparative Example 2, having a cylindrical shape (length: 3 mm) and formed of a liquid crystal polyester resin composition, were produced.

The length-weighted average fiber length of the PAN-based carbon fibers 1 included in the pellets was 188 μm.

(Comparative Example 3)

The liquid crystal polyester 1 and the PAN-based carbon fibers 1 were blended with a tumbler in a proportion of a blending amount of 100 parts by mass to 82 parts by mass, and were collectively charged from the main raw material feeder of the twin-screw extruder according to Example 1, and the mixture was melt-kneaded under the conditions of a cylinder temperature of 340°C and a screw rotation speed of 200 rpm to obtain liquid crystal polyester resin pellets of Comparative Example 3, having a cylindrical shape (length: 3 mm) and formed of a liquid crystal polyester resin composition.

The length-weighted average fiber length of the PAN-based carbon fibers 1 in the pellets was 85 μm.

(Example 2)

Liquid crystal polyester resin pellets of Example 2 were obtained in the same manner as in Example 1, except that the blending proportion of the liquid crystal polyester 1 to the pitch-based carbon fibers 1 in Example 1 of 100 parts by mass to 82 parts by mass was changed to a blending proportion of the liquid crystal polyester 1 to the pitch-based carbon fibers 1 of 100 parts by mass to 18 parts by mass.

The length-weighted average fiber length of the pitch-based carbon fibers 1 in the pellets was 280 μm.

(Comparative Example 4)

Liquid crystal polyester resin pellets of Comparative Example 4 were obtained in the same manner as in Comparative Example 1, except that the blending proportion of the liquid crystal polyester 1 to the pitch-based carbon fibers 1 in Comparative Example 1 of 100 parts by mass to 82 parts by mass was changed to a blending proportion of the liquid crystal polyester 1 to the pitch-based carbon fibers 1 of 100 parts by mass to 18 parts by mass.

The length-weighted average fiber length of the pitch-based carbon fibers 1 in the pellets was 97 μm.

(Comparative Example 5)

The liquid crystal polyester 2 obtained in the above <Production of Liquid Crystal Polyester 2> and pitch-based carbon fibers 1 (manufactured by Mitsubishi Chemical Co., Ltd., DIALEAD (registered trademark) K223HE, cut length: 6 mm, tensile strength: 3,800 MPa, tensile elastic modulus: 900 GPa, density: 2.20 g/cm$^3$) were supplied to a twin-screw extruder (manufactured by Ikegai Corp., "PCM30-HS", cylinder temperature: 360°C, screw rotation speed: 100 rpm) with a main raw material feeder in the upstream part and a side feeder in the downstream part in a proportion of a blending amount of 100 parts by mass to 82 parts by mass such that the liquid crystal polyester was supplied from the main raw material feeder and the pitch-based carbon fibers were supplied from the side feeder, and after melt-kneading, liquid crystal polyester resin pellets of Comparative Example 5, having a cylindrical shape (length: 3 mm) and formed of a liquid crystal polyester resin composition, were produced.

The length-weighted average fiber length of the pitch-based carbon fibers 1 in the pellets was 212 μm.

(Comparative Example 6)

The liquid crystal polyester 3 obtained in the above <Production of Liquid Crystal Polyester 3> and pitch-based carbon fibers 1 (manufactured by Mitsubishi Chemical Co., Ltd., DIALEAD (registered trademark) K223HE, cut length: 6 mm, tensile strength: 3,800 MPa, tensile elastic modulus: 900 GPa, density: 2.20 g/cm$^3$) were supplied to a twin-screw extruder (manufactured by Ikegai Corp., "PCM30-HS", cylinder temperature: 380°C, screw rotation speed: 100 rpm) with a main raw material feeder in the upstream part and a side feeder in the downstream part in a proportion of a blending amount of 100 parts by mass to 82 parts by mass such that the liquid crystal polyester was supplied from the main raw material feeder and the pitch-based carbon fibers were supplied from the side feeder, and after melt-kneading, liquid crystal polyester resin pellets of Comparative Example 6, having a cylindrical shape (length: 3 mm) and formed of a liquid crystal polyester resin composition, were produced.

The length-weighted average fiber length of the pitch-based carbon fibers 1 in the pellets was 261 μm.

(Comparative Example 7)

The liquid crystal polyester 4 obtained in the above <Production of Liquid Crystal Polyester 4> and pitch-based carbon fibers 1 (manufactured by Mitsubishi Chemical Co., Ltd., DIALEAD (registered trademark) K223HE, cut length: 6 mm, tensile strength: 3,800 MPa, tensile elastic modulus: 900 GPa, density: 2.20 g/cm$^3$) were supplied to a twin-screw extruder (manufactured by Ikegai Corp., "PCM30-HS", cylinder temperature: 350°C, screw rotation speed: 100 rpm) with a main raw material feeder in the upstream part and a side feeder in the downstream part in a proportion of a blending amount of 100 parts by mass to 82 parts by mass such that the liquid crystal polyester was supplied from the main raw material feeder and the pitch-based carbon fibers were supplied from the side feeder, and after melt-kneading, liquid crystal polyester resin pellets of Comparative Example 7, having a cylindrical shape (length: 3 mm) and formed of a liquid crystal polyester resin composition, were produced.
The length-weighted average fiber length of the pitch-based carbon fibers 1 in the pellets was 255 μm.

(Comparative Example 8)

Liquid crystal polyester resin pellets of Comparative Example 8, having a cylindrical shape (length: 3 mm), were obtained in the same manner as in Comparative Example 6, except that the blending proportion of the liquid crystal polyester 3 to the pitch-based carbon fibers 1 in Comparative Example 6 of 100 parts by mass to 82 parts by mass was changed to a blending proportion of the liquid crystal polyester 3 to the pitch-based carbon fibers 1 of 100 parts by mass to 18 parts by mass.
The length-weighted average fiber length of the pitch-based carbon fibers 1 in the pellets was 267 μm.

(Example 3)

The liquid crystal polyester 5 obtained in the above <Production of Liquid Crystal Polyester 5> and the pitch-based carbon fibers 1 were supplied to a twin-screw extruder (manufactured by Ikegai Corp., "PCM30-HS", cylinder temperature: 330°C, screw rotation speed: 100 rpm) with a main raw materialfeeder in the upstream part and a side feeder in the downstream part in a proportion of a blending amount of 100 parts by mass to 82 parts by mass such that the liquid crystal polyester 5 was supplied from the main raw materialfeeder and the pitch-based carbon fibers 1 were supplied from the side feeder, and after melt-kneading, liquid crystal polyester resin pellets of Example 3, having a cylindrical shape (length: 3 mm) and formed of a liquid crystal polyester resin composition, were produced.
The length-weighted average fiber length of the fibrous fillers (pitch-based carbon fibers 1) included in the pellets was 181 μm.

(Comparative Example 9)

The liquid crystal polyester 5 and the pitch-based carbon fibers 1 were blended with a tumbler in a proportion of a blending amount of 100 parts by mass to 82 parts by mass, and were collectively charged from the main raw materialfeeder of the twin-screw extruder according to Example 3, and the mixture was melt-kneaded under the conditions of a cylinder temperature of 300°C and a screw rotation speed of 200 rpm to obtain liquid crystal polyester resin pellets of Comparative Example 9, having a cylindrical shape (length: 3 mm) and formed of a liquid crystal polyester resin composition.
The length-weighted average fiber length of the pitch-based carbon fibers 1 in the pellets was 96 μm.

(Example 4)

Liquid crystal polyester resin pellets of Example 4 were obtained in the same manner as in Example 3, except that the blending proportion of the liquid crystal polyester 5 to the pitch-based carbon fibers 1 in Example 3 of 100 parts by mass to 82 parts by mass was changed to a blending proportion of the liquid crystal polyester 5 to the pitch-based carbon fibers 1 of 100 parts by mass to 18 parts by mass.
The length-weighted average fiber length of the pitch-based carbon fibers 1 in the pellets was 231 μm.

(Comparative Example 10)

The liquid crystal polyester 5 and the pitch-based carbon fibers 1 were blended with a tumbler in a proportion of a blending amount of 100 parts by mass to 18 parts by mass, and were collectively charged from the main raw materialfeeder of the twin-screw extruder according to Example 3, and the mixture was melt-kneaded under the conditions of a cylinder temperature of 300°C and a screw rotation speed of 200 rpm to obtain liquid crystal polyester resin pellets of Comparative Example 10, having a cylindrical shape (length: 3 mm) and formed of a liquid crystal polyester resin composition.

The length-weighted average fiber length of the pitch-based carbon fibers 1 in the pellets was 99 $\mu$m.

(Example 5)

The liquid crystal polyester 6 obtained in the above <Production of Liquid Crystal Polyester 6> and the pitch-based carbon fibers 1 were supplied to a twin-screw extruder (manufactured by Ikegai Corp., "PCM30-HS", cylinder temperature: 280°C, screw rotation speed: 100 rpm) with a main raw materialfeeder in the upstream part and a side feeder in the downstream part in a proportion of a blending amount of 100 parts by mass to 82 parts by mass such that the liquid crystal polyester 6 was supplied from the main raw materialfeeder and the pitch-based carbon fibers 1 were supplied from the side feeder, and after melt-kneading, liquid crystal polyester resin pellets of Example 5, having a cylindrical shape (length: 3 mm) and formed of a liquid crystal polyester resin composition, were produced.

The length-weighted average fiber length of the fibrous fillers (pitch-based carbon fibers 1) included in the pellets was 164 $\mu$m.

(Comparative Example 11)

The liquid crystal polyester 6 and the pitch-based carbon fibers 1 were blended with a tumbler in a proportion of a blending amount of 100 parts by mass to 82 parts by mass, and were collectively charged from the main raw material feeder of the twin-screw extruder according to Example 5, and the mixture was melt-kneaded under the conditions of a cylinder temperature of 250°C and a screw rotation speed of 200 rpm to obtain liquid crystal polyester resin pellets of Comparative Example 11, having a cylindrical shape (length: 3 mm) and formed of a liquid crystal polyester resin composition.

The length-weighted average fiber length of the pitch-based carbon fibers 1 in the pellets was 99 $\mu$m.

<Production of Injection-molded Test Piece>

The liquid crystal polyester resin pellets of Example 1 and 2, and Comparative Examples 1 to 4 were put into an injection molding machine TR450EH3 (manufactured by Sodick Co., Ltd.) having a cylinder temperature of 380°C, a multipurpose test piece (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa.

The liquid crystal polyester resin pellets of Comparative Example 5 were put into an injection molding machine TR450EH3 (manufactured by Sodick Co., Ltd.) having a cylinder temperature of 360°C, a multipurpose test piece (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa.

The liquid crystal polyester resin pellets of Comparative Examples 6 and 8 were put into an injection molding machine TR450EH3 (manufactured by Sodick Co., Ltd.) having a cylinder temperature of 380°C, a multipurpose test piece (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa.

The liquid crystal polyester resin pellets of Comparative Example 7 were put into an injection molding machine TR450EH3 (manufactured by Sodick Co., Ltd.) having a cylinder temperature of 350°C, a multipurpose test piece (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa.

The liquid crystal polyester resin pellets of Examples 3 and 4, and Comparative Examples 9 and 10 were put into an injection molding machine TR450EH3 (manufactured by Sodick Co., Ltd.) having a cylinder temperature of 340°C, a multipurpose test piece (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa.

The liquid crystal polyester resin pellets of Example 5 and Comparative Example 11 were put into an injection molding machine TR450EH3 (manufactured by Sodick Co., Ltd.) having a cylinder temperature of 300°C, a multipurpose test piece (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa.

<Tensile Test>

Using a multipurpose test piece (type A1) compliant with JIS K 7139, tensile strength (MPa) and tensile strength strain (%) were measured at a test speed of 5 mm/min in accordance with JIS K 7161 (test method for plastic-tensile properties) and ISO 527. The measurement was performed on 5 samples and the average value thereof was obtained. The measurement results are shown in Tables 1 to 4.

<Flexural Test>

From the obtained multipurpose test piece (type A1) of each example compliant with JIS K 7139, a test piece having a width of 10 mm, a thickness of 4 mm, and a length of 80 mm was cut out in accordance with JIS K 7171 (method for determining plastic-flexural characteristics) and ISO 178. Using a TENSILON universal material tester RTG-1250 (manufactured by A&D Company, Limited), the test piece was subjected to a 3-point flexural test 5 times at a test speed of 2 mm/min, a distance between points of 64 mm, and an indenter radius of 5 mm, and flexural strength and flexural modulus were obtained from the average value thereof. The measurement results are shown in Tables 1 to 4.

In addition, in Tables 1, 2, and 4, a value obtained by dividing the flexural modulus of Comparative Example 1 from the flexural modulus of Example 1, a value obtained by dividing the flexural modulus of Comparative Example 3 from the flexural modulus of Comparative Example 2, a value obtained by dividing the flexural modulus of Comparative Example 4 from the flexural modulus of Example 2, a value obtained by dividing the flexural modulus of Comparative Example 9 from the flexural modulus of Example 3, a value obtained by dividing the flexural modulus of Comparative Example 10 from the flexural modulus of Example 4, and a value obtained by dividing the flexural modulus of Comparative Example 11 from the flexural modulus of Example 5 are shown as "flexural modulus improvement rate".

[Table 1]

| | | | Example 1 | Comparative Example 1 | Comparative Example 2 | Comparative Example 3 |
|---|---|---|---|---|---|---|
| Resin pellets | Liquid crystal polyester 1 | Part by mass | 100 | 100 | 100 | 100 |
| | Fibrous filler (pitch-based carbon fibers 1) | Part by mass | 82 | 82 | | |
| | Fibrous filler (PAN-based carbon fibers 1) | Part by mass | | | 82 | 82 |
| | Length-weighted average fiber length of fibrous filler | μm | 192 | 88 | 188 | 85 |
| | Interfacial shear strength | MPa | 38 | 38 | 38 | 38 |
| Molded article | Length-weighted average fiber length of fibrous filler | μm | 147 | 50 | 151 | 53 |
| | Tensile strength | MPa | 162 | 157 | 175 | 166 |
| | Tensile strength strain | % | 1.9 | 2.2 | 2.2 | 1.8 |
| | Flexural strength | MPa | 257 | 233 | 314 | 185 |
| | Flexural modulus | GPa | 50 | 28 | 32 | 27 |
| | Flexural modulus improvement rate | | 1.8 | | 1.2 | |

[Table 2]

|  |  |  | Example 2 | Comparative Example 4 |
|---|---|---|---|---|
| Resin pellets | Liquid crystal polyester 1 | Part by mass | 100 | 100 |
|  | Fibrous filler (pitch-based carbon fibers 1) | Part by mass | 18 | 18 |
|  | Length-weighted average fiber length of fibrous filler | μm | 280 | 97 |
|  | Interfacial shear strength | MPa | 38 | 38 |
| Molded article | Length-weighted average fiber length of fibrous filler | μm | 214 | 65 |
|  | Tensile strength | MPa | 129 | 129 |
|  | Tensile strength strain | % | 3.5 | 3.8 |
|  | Flexural strength | MPa | 188 | 185 |
|  | Flexural modulus | GPa | 20 | 12 |
| Flexural modulus improvement rate |  |  | 1.7 | |

[Table 3]

|  |  |  | Comparative Example 5 | Comparative Example 6 | Comparative Example 7 | Comparative Example 8 |
|---|---|---|---|---|---|---|
| Resin pellets | Liquid crystal polyester 2 | Part by mass | 100 |  |  |  |
|  | Liquid crystal polyester 3 | Part by mass |  | 100 |  | 100 |
|  | Liquid crystal polyester 4 | Part by mass |  |  | 100 |  |
|  | Fibrous filler (pitch-based carbon fibers 1) | Part by mass | 82 | 82 | 82 | 18 |
|  | Length-weighted average fiber length of fibrous filler | μm | 212 | 261 | 255 | 267 |
|  | Interfacial shear strength | MPa | 20 | 19 | 19 | 19 |
| Molded article | Length-weighted average fiber length of fibrous filler | μm | 155 | 167 | 157 | 194 |
|  | Tensile strength | MPa | 142 | 110 | 120 | 126 |
|  | Tensile strength strain | % | 1.7 | 1.8 | 2.0 | 3.3 |
|  | Flexural strength | MPa | 212 | 185 | 185 | 140 |
|  | Flexural modulus | GPa | 38 | 39 | 37 | 15 |

[Table 4]

| | | | Example 3 | Comparative Example 9 | Example 4 | Comparative Example 10 | Example 5 | Comparative Example 11 |
|---|---|---|---|---|---|---|---|---|
| Resin pellets | Liquid crystal polyester 5 | Part by mass | 100 | 100 | 100 | 100 | | |
| | Liquid crystal polyester 6 | Part by mass | | | | | 100 | 100 |
| | Fibrous filler (pitch-based carbon fibers 1) | Part by mass | 82 | 82 | 18 | 18 | 82 | 82 |
| | Length-weighted average fiber length of fibrous filler | $\mu$m | 181 | 96 | 231 | 99 | 164 | 99 |
| | Interfacial shear strength | MPa | 30 | 30 | 30 | 30 | 32 | 32 |
| Molded article | Length-weighted average fiber length of fibrous filler | $\mu$m | 155 | 71 | 208 | 87 | 135 | 92 |
| | Tensile strength | MPa | 147 | 139 | 150 | 142 | 80 | 69 |
| | Tensile strength strain | % | 1.5 | 2.7 | 2.6 | 6.4 | 0.7 | 0.7 |
| | Flexural strength | MPa | 245 | 203 | 192 | 179 | 135 | 115 |
| | Flexural modulus | GPa | 47 | 25 | 22 | 13 | 40 | 25 |
| | Flexural modulus improvement rate | | 1.9 | | 1.7 | | 1.6 | |

As shown in Table 1, it was confirmed that the injection-molded test piece (hereinafter, referred to as a molded article) produced by using the liquid crystal polyester resin pellets of Example 1 containing the liquid crystal polyester (liquid crystal polyester 1) in which the interfacial shear strength was equal to or greater than 30 MPa and the pitch-based carbon fibers (pitch-based carbon fibers 1) in which the length-weighted average fiber length was equal to or greater than 100 μm had a higher flexural modulus than the molded articles produced by using the liquid crystal polyester resin pellets of Comparative Examples 1 to 3.

The molded article produced by using the liquid crystal polyester resin pellets of Comparative Example 1 had a poor flexural modulus because the length-weighted average fiber length of the pitch-based carbon fibers (pitch-based carbon fibers 1) was smaller than 100 μm.

The molded articles produced by using the liquid crystal polyester resin pellets of Comparative Examples 2 and 3 had a poor flexural modulus because the PAN-based carbon fibers (PAN-based carbon fibers 1) were contained instead of the pitch-based carbon fibers.

Comparing the flexural modulus improvement rates in Example 1 and Comparative Example 1 with the flexural modulus improvement rates in Comparative Examples 2 and 3, it was confirmed that the flexural modulus improvement rate in Example 1 and Comparative Example 1 was higher. As a result, it was confirmed that the effect on the flexural modulus due to the length-weighted average fiber length of the carbon fibers was remarkable in a case where the pitch-based carbon fibers are contained.

As shown in Table 2, it was confirmed that the molded article produced by using the liquid crystal polyester resin pellets of Example 2 containing the liquid crystal polyester (liquid crystal polyester 1) in which the interfacial shear strength was equal to or greater than 30 MPa and the pitch-based carbon fibers (pitch-based carbon fibers 1) in which the length-weighted average fiber length was equal to or greater than 100 μm had a higher flexural modulus than the molded article produced by using the liquid crystal polyester resin pellets of Comparative Example 4.

The molded article produced by using the liquid crystal polyester resin pellets of Comparative Example 4 had a poor flexural modulus because the length-weighted average fiber length of the pitch-based carbon fibers (pitch-based carbon fibers 1) was smaller than 100 μm.

Since the flexural modulus improvement rate in Example 2 and Comparative Example 4 was relatively high, it was confirmed that the flexural modulus could be sufficiently improved even in a case where the content of the pitch-based carbon fibers was small.

As shown in Table 3, even in a case where the molded article contained the pitch-based carbon fibers (pitch-based carbon fibers 1) having a length-weighted average fiber length of equal to or greater than 100 μm, the molded article produced by using the liquid crystal polyester resin pellets of Comparative Examples 5 to 8 containing the liquid crystal polyester (liquid crystal polyesters 2 to 4) in which the interfacial shear strength was smaller than 30 MPa was inferior in flexural modulus to the molded article produced by using the liquid crystal polyester resin pellets of Example 1.

As shown in Table 4, it was confirmed that the molded article produced by using the liquid crystal polyester resin pellets of Example 3 containing the liquid crystal polyester (liquid crystal polyester 5) in which the interfacial shear strength was equal to or greater than 30 MPa and the pitch-based carbon fibers (pitch-based carbon fibers 1) in which the length-weighted average fiber length was equal to or greater than 100 μm had a higher flexural modulus than the molded article produced by using the liquid crystal polyester resin pellets of Comparative Example 9.

The molded article produced by using the liquid crystal polyester resin pellets of Comparative Example 9 had a poor flexural modulus because the length-weighted average fiber length of the pitch-based carbon fibers (pitch-based carbon fibers 1) was smaller than 100 μm.

In addition, it was confirmed that the molded article produced by using the liquid crystal polyester resin pellets of Example 4 containing the liquid crystal polyester (liquid crystal polyester 5) in which the interfacial shear strength was equal to or greater than 30 MPa and the pitch-based carbon fibers (pitch-based carbon fibers 1) in which the length-weighted average fiber length was equal to or greater than 100 μm had a higher flexural modulus than the molded article produced by using the liquid crystal polyester resin pellets of Comparative Example 10.

Since the flexural modulus improvement rate in Example 4 and Comparative Example 10 was relatively high, it was confirmed that the flexural modulus could be sufficiently improved even in a case where the content of the pitch-based carbon fibers was small.

In addition, as shown in Table 4, it was confirmed that the molded article produced by using the liquid crystal polyester resin pellets of Example 5 containing the liquid crystal polyester (liquid crystal polyester 6) in which the interfacial shear strength was equal to or greater than 30 MPa and the pitch-based carbon fibers (pitch-based carbon fibers 1) in which the length-weighted average fiber length was equal to or greater than 100 μm had a higher flexural modulus than the molded article produced by using the liquid crystal polyester resin pellets of Comparative Example 11.

The molded article produced by using the liquid crystal polyester resin pellets of Comparative Example 11 had a poor flexural modulus because the length-weighted average fiber length of the pitch-based carbon fibers (pitch-based carbon fibers 1) was smaller than 100 μm.

From the comparison of the flexural modulus improvement rate in Example 1 and Comparative Example 1, the flexural modulus improvement rate in Example 3 and Comparative Example 9, and the flexural modulus improvement rate in Example 5 and Comparative Example 11, it was confirmed that, in a case where a liquid crystal polyester having a high weight-average molecular weight (for example, a liquid crystal polyester having a weight-average molecular weight of 150,000 or more) was further combined, the effect of improving the flexural modulus is particularly excellent.

From the above, it was confirmed that, according to the liquid crystal polyester resin pellets of the present embodiment, a molded article having an excellent flexural modulus can be produced.

Although preferred examples of the present invention are described above, the present invention is not limited to these examples. It is possible to add other configurations or to omit, replace or modify the configurations described herein without departing from the spirit of the present invention. The present invention is not limited by the above description, but only by the scope of the appended claims.

**Claims**

1. Liquid crystal polyester resin pellets, comprising:

   a liquid crystal polyester; and
   pitch-based carbon fibers,
   wherein a length-weighted average fiber length of the pitch-based carbon fibers is equal to or greater than 100 μm, and
   the liquid crystal polyester has an interfacial shear strength of equal to or greater than 30 MPa as measured by a single fiber pull-out method with respect to an interface with a single fiber of pitch-based carbon fibers after a sizing agent is removed.

2. The liquid crystal polyester resin pellets according to Claim 1,
   wherein a content proportion of the pitch-based carbon fibers is equal to or greater than 10 parts by mass and smaller than 120 parts by mass with respect to 100 parts by mass of the liquid crystal polyester.

3. The liquid crystal polyester resin pellets according to Claim 1 or 2,
   wherein the liquid crystal polyester includes a repeating unit having a 2,6-naphthylene group.

4. The liquid crystal polyester resin pellets according to Claim 3,
   wherein the liquid crystal polyester includes a repeating unit represented by Formula (1):

   (1) $-O-Ar^1-CO-$

   wherein $Ar^1$ represents the 2,6-naphthylene group.

5. The liquid crystal polyester resin pellets according to Claim 4,

   wherein the liquid crystal polyester includes a repeating unit represented by Formula (1), (2), (3), or (4),
   a content of the repeating unit represented by Formula (1) is equal to or greater than 20 mol% and equal to or smaller than 100 mol% with respect to a total amount of the repeating units represented by Formulae (1), (2), (3), and (4),
   a content of the repeating unit represented by Formula (2) is equal to or greater than 0 mol% and equal to or smaller than 35 mol% with respect to the total amount of the repeating units represented by Formulae (1), (2), (3), and (4),
   a content of the repeating unit represented by Formula (3) is equal to or greater than 0 mol% and equal to or smaller than 35 mol% with respect to the total amount of the repeating units represented by Formulae (1), (2), (3), and (4), and
   a content of the repeating unit represented by Formula (4) is equal to or greater than 0 mol% and equal to or smaller than 35 mol% with respect to the total amount of the repeating units represented by Formulae (1), (2), (3), and (4):

   (1) $-O-Ar^1-CO-$
   (2) $-CO-Ar^2-CO-$
   (3) $-CO-Ar^3-CO-$
   (4) $-O-Ar^4-O-$

wherein $Ar^1$ and $Ar^2$ represent the 2,6-naphthylene group, $Ar^3$ represents a phenylene group or a biphenylene group, and $Ar^4$ represents a phenylene group, a naphthylene group, or a biphenylene group.

6. The liquid crystal polyester resin pellets according to any one of Claims 1 to 5,
   wherein a weight-average molecular weight of the liquid crystal polyester is equal to or greater than 150,000.

7. A production method for the liquid crystal polyester resin pellets according to any one of Claims 1 to 6, comprising:
   a step of melt-kneading the liquid crystal polyester and the pitch-based carbon fibers.

8. A liquid crystal polyester resin molded article, comprising:

   a liquid crystal polyester; and
   pitch-based carbon fibers,
   wherein the liquid crystal polyester has an interfacial shear strength of equal to or greater than 30 MPa as measured by a single fiber pull-out method with respect to an interface with a single fiber of pitch-based carbon fibers after a sizing agent is removed, and
   a length-weighted average fiber length of the pitch-based carbon fibers is equal to or greater than 100 $\mu$m.

**INTERNATIONAL SEARCH REPORT**

| International application No. |
|---|
| PCT/JP2020/029756 |

**A. CLASSIFICATION OF SUBJECT MATTER**
C08K 7/06(2006.01)i; C08L 67/00(2006.01)i; C08L 67/04(2006.01)i; C08J 5/04(2006.01)i; C08K 3/013(2018.01)i
FI: C08L67/00; C08K7/06; C08K3/013; C08J5/04 CFD; C08L67/04
According to International Patent Classification (IPC) or to both national classification and IPC

**B. FIELDS SEARCHED**

Minimum documentation searched (classification system followed by classification symbols)
C08K7/06; C08L67/00; C08L67/04; C08J5/04; C08K3/013

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/049816 A1 (TORAY INDUSTRIES, INC.) 14.03.2019 (2019-03-14) entire text | 1-8 |
| A | WO 2019/087965 A1 (SUMITOMO CHEMICAL CO., LTD.) 09.05.2019 (2019-05-09) entire text | 1-8 |
| A | JP 2019-108543 A (UENO FINE CHEMICALS INDUSTRY, LTD.) 04.07.2019 (2019-07-04) entire text | 1-8 |
| A | WO 2013/069782 A1 (SUMITOMO CHEMICAL CO., LTD.) 16.05.2013 (2013-05-16) entire text | 1-8 |
| A | JP 2007-100078 A (SUMITOMO CHEMICAL CO., LTD.) 19.04.2007 (2007-04-19) entire text | 1-8 |
| A | WO 2012/128246 A1 (SUMITOMO CHEMICAL CO., LTD.) 27.09.2012 (2012-09-27) entire text | 1-8 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 October 2020 (13.10.2020) | 20 October 2020 (20.10.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2020/029756

| Patent Documents referred in the Report | Publication Date | Patent Family | Publication Date |
|---|---|---|---|
| WO 2019/049816 A1 | 14 Mar. 2019 | (Family: none) | |
| WO 2019/087965 A1 | 09 May 2019 | TW 201922919 A | |
| JP 2019-108543 A | 04 Jul. 2019 | (Family: none) | |
| WO 2013/069782 A1 | 16 May 2013 | TW 201334945 A | |
| JP 2007-100078 A | 19 Apr. 2007 | US 2007/0057236 A1 entire text | |
| WO 2012/128246 A1 | 27 Sep. 2012 | TW 201302421 A | |

Form PCT/ISA/210 (patent family annex) (January 2015)

**EP 4 011 950 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019148162 A
- JP 2020071639 A
- JP 2012193270 A